# EUROPEAN PATENT APPLICATION

(11) **EP 4 668 993 A1**
(43) Date of publication of application: **24.12.2025**
(21) Application number: 24756834.8
(22) Date of filing: 09.02.2024
(51) Int. Cl.: H04W 72/40, H04W 28/14, H04W 40/02, H04W 88/04, H04W 92/18

(54) **COMMUNICATION SYSTEM**

(30) Priority: 14.02.2023 JP 2023020841
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2024/004619
(87) International publication number: WO 2024/171989

(57) **Abstract**

A communication system capable of communicating with an IoT device having ultra-low power consumption includes a base station supporting a fifth generation radio access system, a communication terminal configured to connect to the base station, and a device configured to connect to the base station or the communication terminal, in which the base station is configured to transmit, to the communication terminal, configuration information for communication being information about a configuration for communication between the communication terminal and the device, and configuration information for device data transmission being information about a configuration for transmitting device data acquired from the device by the communication terminal to the base station, and the communication terminal is configured to perform communication with the device using the configuration information for communication received from the base station, and transmit the device data to the base station using the configuration information for device data transmission received from the base station.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

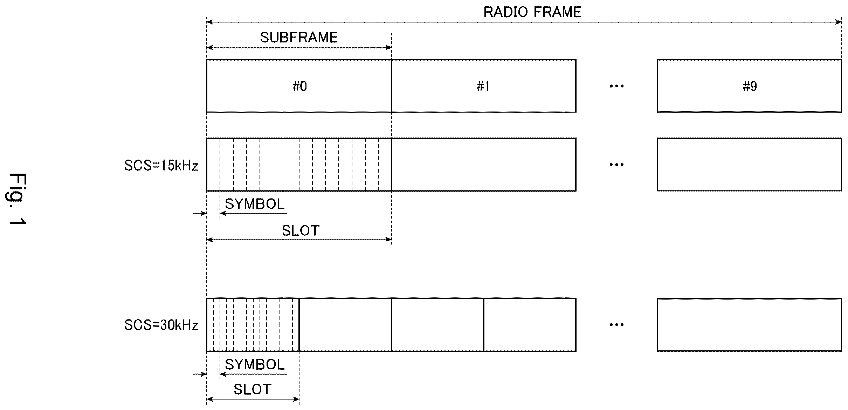

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are required for the mobile communication system. For example, new technologies are required to introduce, into the mobile communication system, Internet of Things (IoT) devices having ultra-low power consumption, such as battery-less devices and devices that do not require replacement or charging and are capable of communication only with an energy storing function. In 3GPP, discussion on such new technologies has begun (NPLs 30, 31, 32, and 33).

### Citation List

### Non Patent Literature

[NPL 1] 3GPP TS 36.300 V17.2.0
[NPL 2] 3GPP TS 38.300 V17.2.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.6.0
[NPL 11] 3GPP TS 38.211 V17.3.0
[NPL 12] 3GPP TS 38.212 V17.3.0
[NPL 13] 3GPP TS 38.213 V17.3.0
[NPL 14] 3GPP TS 38.214 V17.3.0
[NPL 15] 3GPP TS 38.321 V17.2.0
[NPL 16] 3GPP TS 38.322 V17.1.0
[NPL 17] 3GPP TS 38.323 V17.2.0
[NPL 18] 3GPP TS 37.324 V17.0.0
[NPL 19] 3GPP TS 38.331 V17.2.0
[NPL 20] 3GPP TS 38.401 V17.2.0
[NPL 21] 3GPP TS 38.413 V17.2.0
[NPL 22] 3GPP TS 37.340 V17.2.0
[NPL 23] 3GPP TS 38.423 V17.2.0
[NPL 24] 3GPP TS 38.305 V17.2.0
[NPL 25] 3GPP TS 23.273 V17.6.0
[NPL 26] 3GPP TR 23.703 V12.0.0
[NPL 27] 3GPP TS 23.287 V17.4.0
[NPL 28] 3GPP TS 23.303 V17.0.0
[NPL 29] 3GPP TS 38.340 V17.2.0
[NPL 30] 3GPP RP-222685
[NPL 31] 3GPP RP-222335
[NPL 32] 3GPP RP-222126
[NPL 33] 3GPP RP-222069
[NPL 34] 3GPP RP-222440
[NPL 35] 3GPP TS-38.101-1 V17.6.0
[NPL 36] 3GPP TS-38.101-2 V17.7.0
[NPL 37] 3GPP TS 37.320 V17.1.0
[NPL 38] 3GPP TS 32.422 V17.8.0

### SUMMARY

### Technical Problem

In the mobile communication system, communication for various services is performed, and thus it is assumed that an enormous number of IoT devices such as wearable terminals and sensors are to be used in the future. Thus, IoT devices having ultra-low power consumption, such as battery-less devices and devices that do not require replacement or charging and are capable of communication only with an energy storing function, are required to be used. New technologies for introducing such IoT devices having ultra-low power consumption into the mobile communication system are required. In 3GPP, discussion on the new technologies has begun (NPLs 30, 31, 32, and 33). However, no disclosures have been made on a specific method for introducing such IoT devices having ultra-low power consumption into the mobile communication system. For example, resources for performing communication with an IoT device having ultra-low power consumption, a method of communication between an IoT device and a UE or a gNB, and the like have not been disclosed, and accordingly the IoT devices having ultra-low power consumption cannot be introduced into the mobile communication system and communication cannot be performed.

In view of the problem, the present disclosure has one object to implement a communication system for enabling communication with an IoT device having ultra-low power consumption.

### Solution to Problem

A communication system according to the present disclosure includes a base station supporting a fifth generation radio access system, a communication terminal configured to connect to the base station, and a device configured to connect to the base station or the communication terminal, in which the base station is configured to transmit, to the communication terminal, configuration information for communication being information about a configuration for communication between the communication terminal and the device, and configuration information for device data transmission being information about a configuration for transmitting device data acquired from the device by the communication terminal to the base station, and the communication terminal is configured to perform communication with the device using the configuration information for communication received from the base station, and transmit the device data to the base station using the configuration information for device data transmission received from the base station.

### Advantageous Effects of Invention

According to the present disclosure, a communication system for enabling communication with an IoT device having ultra-low power consumption can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating a sequence example in which a UE transmits device data acquired from a device to a base station according to a first embodiment;
Fig. 12 is a diagram illustrating a sequence example in which the UE transmits device data acquired from a plurality of devices to the base station according to the first embodiment;
Fig. 13 is a diagram illustrating another sequence example in which the UE transmits device data acquired from the plurality of devices to the base station according to the first embodiment;
Fig. 14 is a diagram illustrating a sequence example in which a UE being not connected to a base station transmits device data acquired from a device to a base station according to a second embodiment;
Fig. 15 is a diagram illustrating a sequence example of device data communication between a device and a NW according to a third embodiment;
Fig. 16 is a diagram illustrating a first other sequence example of device data communication between the device and the NW according to the third embodiment;
Fig. 17 is a diagram illustrating a second other sequence example of device data communication between the device and the NW according to the third embodiment; and
Fig. 18 is a diagram illustrating a third other sequence example of device data communication between the device and the NW according to the third embodiment.

### DETAILED DESCRIPTION

### First Embodiment

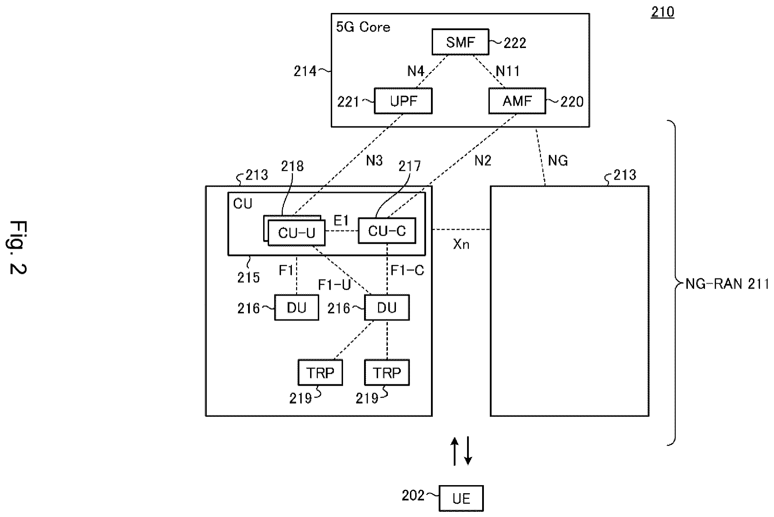

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, every single cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

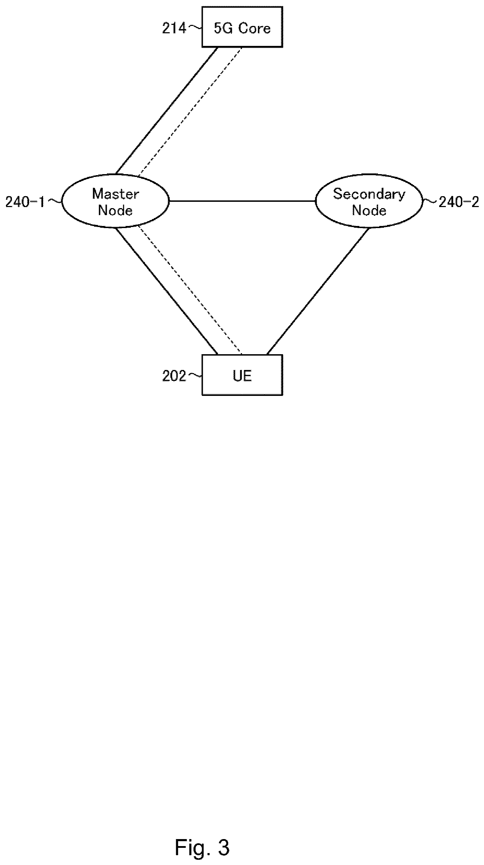

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

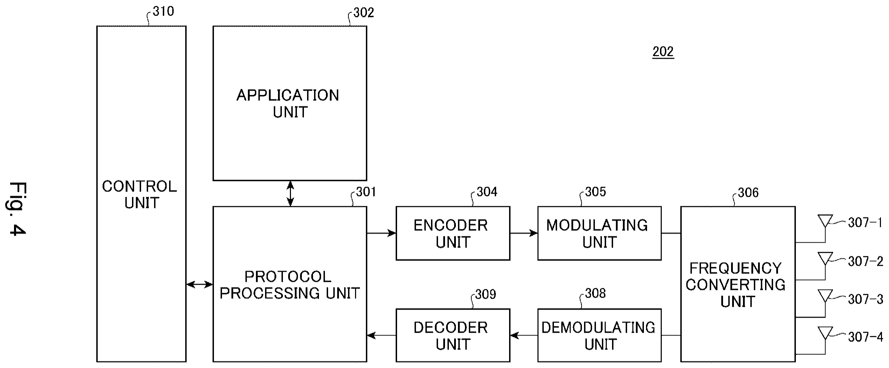

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

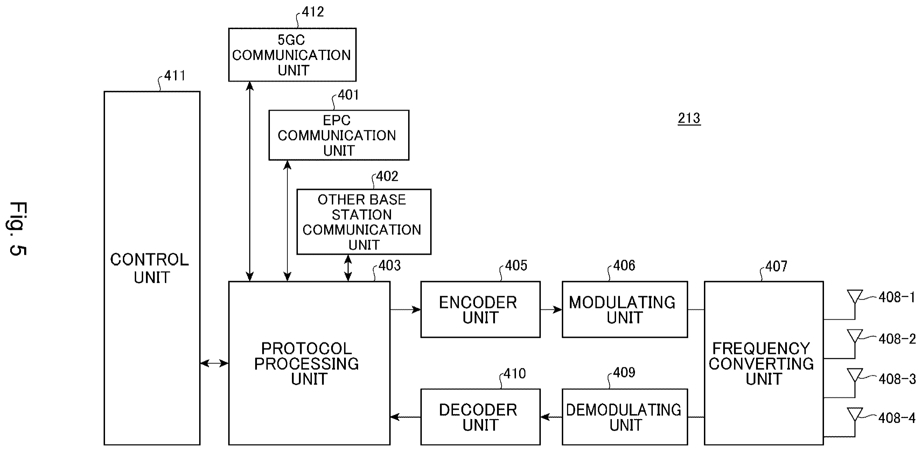

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

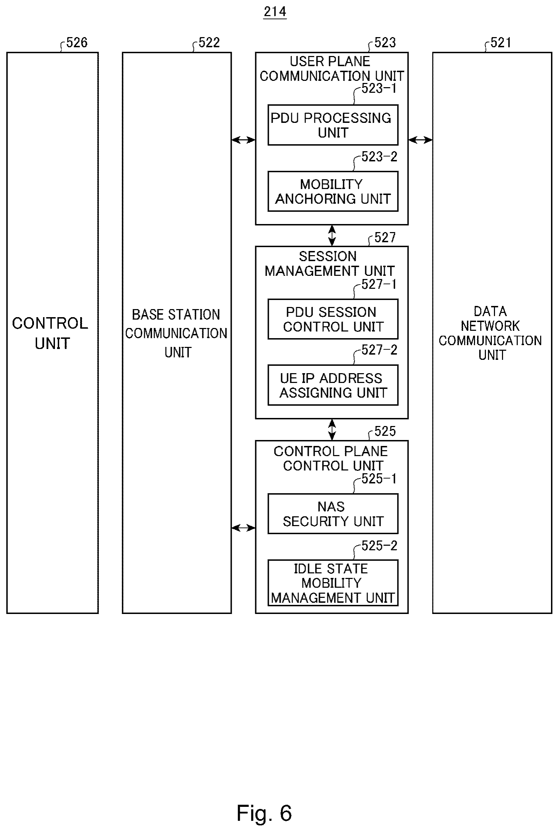

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

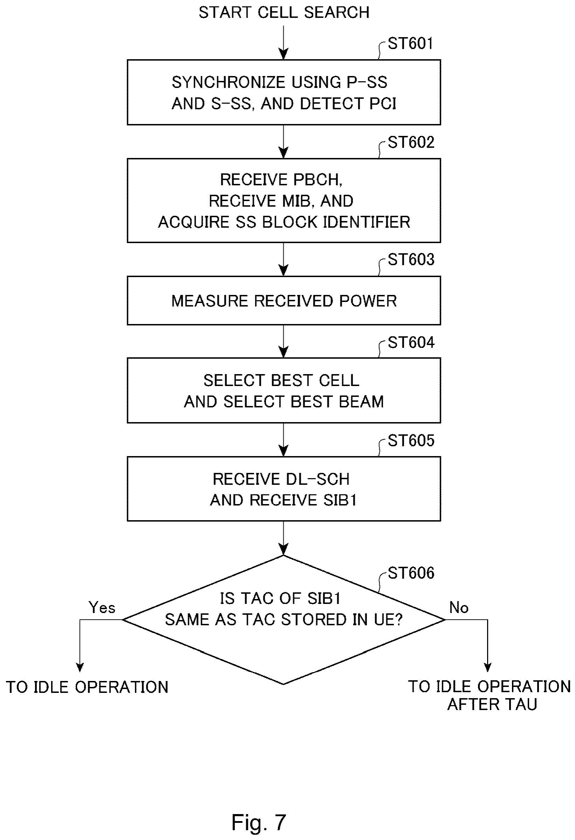

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a surrounding base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

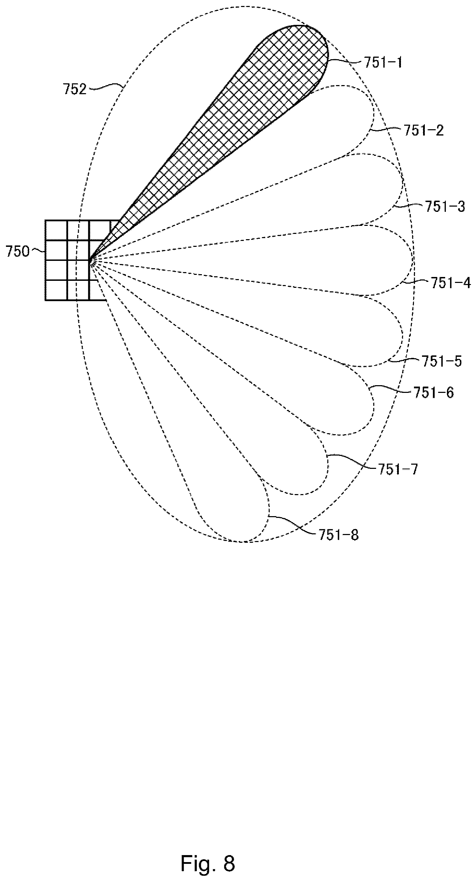

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

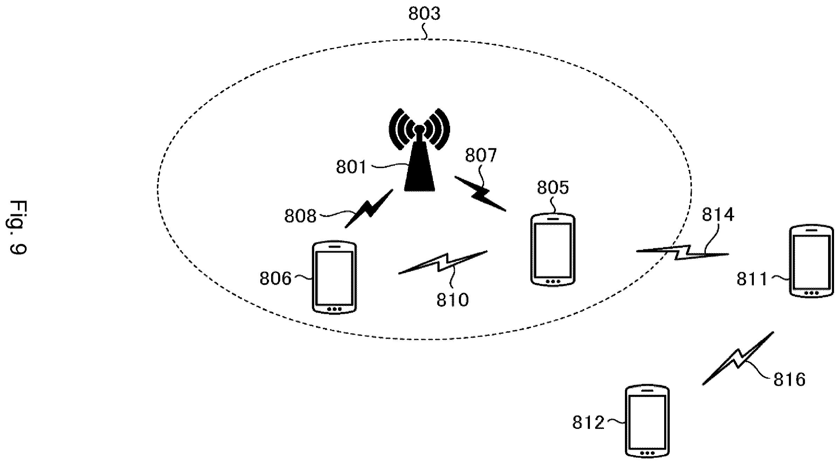

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

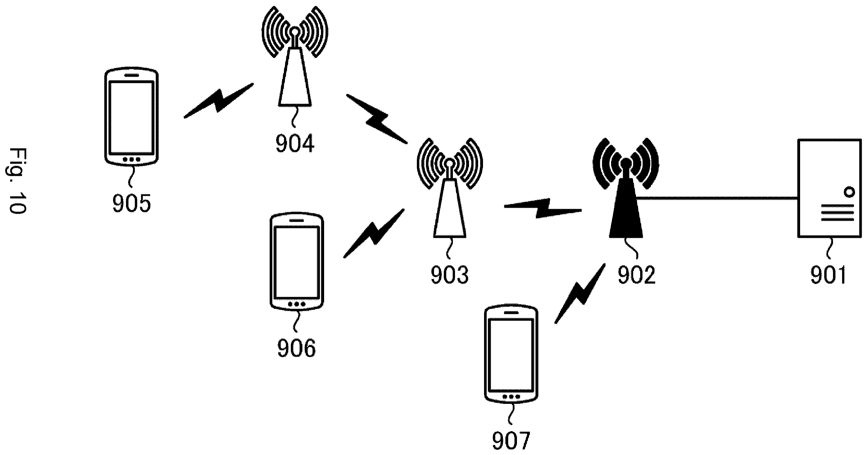

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In 3GPP, introducing an IoT devices (which may be hereinafter referred to as "device") having ultra-low power consumption into the mobile communication system has been discussed. It is proposed that the IoT device having ultra-low power consumption performs communication with the UE or base station by using a communication scheme different from the communication scheme used in air interfaces defined in conventional 3GPP (NPLs 31, 33, and 34). In the mobile communication system in which the device is incorporated, it is assumed that the UE communicating with the device has to perform communication with the NW. A method for allowing such a UE to communicate with the device and the NW will be disclosed.

Communication between a device and a UE is direct communication between the device and the UE, and communication between a device and a base station is direct communication between the device and the base station. Communication between a UE and another UE is direct communication between the UEs, and communication between a UE and a base station is direct communication between the UE and the base station.

The communication between the device and the UE may be communication between the device and the UE for communication between the device and the NW via the UE.

In order to incorporate the device into the mobile communication system, the base station transmits, to the UE, a configuration for UE-device communication. The base station may transmit, to the UE, a configuration for device data transmission from the UE to the base station.

A method for transmitting the above-described configurations from the base station to the UE will be disclosed. The base station may broadcast the above-described pieces of configuration information. The base station may include the pieces of configuration information in an SIB. The base station may broadcast the SIB. The SIB can be transmitted to the entire cell, so that UEs in the cell area can receive the pieces of configuration information. The base station may transmit the pieces of configuration information to the UE in a dedicated manner. The base station may transmit the pieces of configuration information to the UE by using RRC signaling. An RRC message including the pieces of configuration information may be transmitted. For example, An RRCReconfiguration message including the pieces of configuration information may be transmitted. The transmission dedicated for the UE can be performed, and therefore, the pieces of configuration information dedicated for the UE can be transmitted.

Another method will be disclosed. The base station may transmit the pieces of configuration information by using MAC signaling. For example, a MAC CE including the pieces of configuration information may be transmitted. The base station may multiplex the pieces of configuration information with other MAC data, and send them to the UE. This enables efficient transmission because the pieces of configuration information can be transmitted together with other data. Another method will be disclosed. The base station may transmit the pieces of configuration information by using L1/L2 signaling. The base station may include the pieces of configuration information in DCI. The base station may transmit the DCI to the UE on the PDCCH. This enables early transmission of the pieces of configuration information.

Fourteen examples of the configuration information for UE-device communication are disclosed below.

(1) Communication frequency information.
(2) Communication time information.
(3) Communication period information.
(4) Time information.
(5) Communication area information.
(6) Grouping information.
(7) Reception quality information.
(8) Information about a service.
(9) Information about a device.
(10) Information about a transmission source node.
(11) Information to be transmitted from the UE to the device.
(12) Information about a beam.
(13) Information about interference.
(14) Combination of (1) to (13).

(1) is information about a frequency at which UE-device communication is performed. For example, it may include a frequency, a bandwidth, and the like. For example, it may be BWP information. For example, it may be information about an RB (Resource Block) or a subcarrier. For example, it may be information about a subcarrier spacing. (1) may include one or more pieces of the above-described information. (2) is information about a time at which UE-device communication is performed. For example, it may include a communication start time, a communication termination time, a communication time interval, a periodicity, an offset, and the like. For example, it may be information about a symbol length. (2) may include one or more pieces of the above-described information. The time unit may be a time or a time unit used between the UE and the base station. For example, the time unit used between the UE and the base station may be a symbol unit, a slot unit, a subframe unit, a TTI (Transmission Timing Interval) unit, a radio frame unit, or the like. Using the time unit used between the UE and the base station facilitates control for the UE. (3) is information about a period of time during which UE-device communication is performed. It may be a service period of time for UE-device communication. The communication is performed within the communication period, for example, at the time disclosed in (2). (3) may include one or more pieces of the above-described information. The communication period may be configured by using a timer. UE-device communication may be enabled with the timer configuration, and the UE-device communication may be disabled with expiration of the timer. By configuring the communication time in (2) and the communication period in (3), for example, it is possible to provide a service that requires scheduled or periodic communication with the device.

(4) is information for configuring a time for the UE. An absolute time on the NW side may be transmitted. (4) may include one or more pieces of the above-described information. The UE may derive, for example, a communication time with the device based on information about a time at which a signal is received. In this way, it is possible to use synchronized time between UEs. The time information may be notified to the device. The time information may be transmitted from the base station or UE to the device. For example, it may be used for allowing the device to derive information about a data acquisition time. This enables to use synchronized time information between devices.

(5) is information about an area where UE-device communication can be performed. It may be information about an area where UE-device communication cannot be performed (or UE-device communication is prohibited). It may be a list including one or more areas. It may be a list of areas for communication between devices. (5) may include one or more pieces of the above-described information. The area information may be, for example, a beam, a cell, a base station, an RNA (RAN Notification Area), a TA, a PLMN, an NPN (Non-Public Network), or the like. The area information may be information for identifying the above-described information, for example, an identifier. It may be, for example, an identifier of a beam with which UE-device communication can be performed.

One or more devices may be grouped. (6) is information about a group to which one or more devices belong. It may be information about which device is assigned to which group. (6) may include one or more pieces of the above-described information. A grouping method may be used, and the grouping method may be, for example, grouping by service, grouping by device type, or grouping by area. Service types may include, for example, a device for an asset management service, a device for a temperature management service, a service dedicated for a certain company, and the like. Device types may include, for example, a velocity/acceleration sensor device, a temperature sensor device, a pressure sensor device, and the like. Information for identifying the device group may be provided. The information may be, for example, a device group identifier. There may be provided information that associates an identifier of a device group with a device identifier belonging to the device group.

(7) is information about a quality of reception from the device with which UE-device communication can be performed. It may be information about a quality of reception from the device with which UE-device communication cannot be performed. (7) may include one or more pieces of the above-described information. The reception quality information may include, for example, a reception quality, a received power, a RSSI (Received Signal Strength Indicator), a SINR (Signal to Interference plus Noise Ratio), and the like. The reception quality information may be, for example, an error rate. The reception quality information may be a BER (Bit Error Rate), or a FER (Frame Error Rate). For the reception quality information, there may be configured a predetermined value at which UE-device communication can be performed or cannot be performed. A threshold may be provided.

(8) is information about a service that uses UE-device communication. For example, services may include, for example, a device for asset management service, a device for temperature management service, a service dedicated for a certain company, and the like. The services may include, for example, eMBB (enhanced Mobile Broadband), mMTC (massive Machine Type Communication), and URLLC (Ultra-Reliability Low Latency Communication). (8) may include one or more pieces of the above-described information. Information for identifying a service may be provided. The information may be, for example, a service identifier. There may be provided information that associates a service identifier with a device identifier corresponding the service identifier. There may be provided information that associates a service identifier with a group identifier corresponding to the service identifier. The information may be, for example, information about an Application Function (AF) or Application Server (AS) used for a service. The information may be, for example, an address.

(9) is information about a device that can communicate with the UE. The information may be information about a device that cannot communicate with the UE (or a device that is prohibited from communicating with the UE). It may be information for identifying a device, for example, an identifier. For example, it may be a device name. For example, it may be a sensor name. (9) may include one or more pieces of the above-described information. A list of pieces of information about one or more devices may be provided.

(10) is information about a transmission source node that transmits the configuration for UE-device communication. It may be information about a transmission source node that transmits the configuration for device data transmission. It may be information indicating from which node the configuration is transmitted. The information may indicate a node from which the configuration is transmitted directly or a node from which the configuration is transmitted indirectly. For example, the node may be an AF, a CN node, a MnS (Management Service), a base station, or the like. The CN node may be, for example, an AMF, a PCF, or the like. The MnS may be, for example, a MaS (Management System). The UE that has received the information can recognize from which node the configuration is transmitted.

(11) is information transmitted from the UE to the device. The information may be data to be transmitted to the device, or configuration information for UE-device communication. The UE transmits the information to the device.

(12) is information about a beam with which the UE communicates with the device. It may be information about a beam formed by the UE. It may be information about a beam formed by the base station. The information may be information for identifying a beam, for example, an identifier of the beam.

(13) is information about interference in UE-device communication. For example, it may be information about interference being received by the device. It may be information about interference being given by the device. It may be information about interference caused by the transmission and reception of two or more radio schemes within the UE. It may be information about interference being received by another UE. The information about the interference may include, for example, a radio scheme causing interference, a radio scheme being subject to interference, a frequency causing interference, a frequency being subject to interference, a time causing interference, a time being subject to interference, power causing interference, power being subject to interference, information about a device causing interference, and information about a device being subject to interference. The information about interference may be information about interference avoidance. The UE can acquire the information about interference in UE-device communication. For example, by using the above-described pieces of information, it is possible to reduce interference in UE-device communication.

One or a plurality of configurations for UE-device communication disclosed above may be provided. There may be provided information for identifying the configuration for UE-device communication, for example, an identifier thereof. The base station may transmit the identifier to the UE in association with the configuration. A list of one or a plurality of configurations may be provided. The list may include an identifier for one or a plurality of configurations to be configured.

Upon receiving the configuration for UE-device communication from the base station, the UE performs UE-device communication using the configuration information. For example, the UE transmits a data transmission indication to the device using the configuration information, and receives data transmitted in response to the indication.

The UE transmits the data acquired from the device (this data may be referred to as "device data" in the following description) to a destination node to which the device data is to be transmitted. The base station configures the UE for allowing the UE to transmit the device data. Seven examples of the configuration for device data transmission, which is transmitted from the base station to the UE, are disclosed below.

(1) Information about a device.
(2) Information about a group.
(3) Information about a service.
(4) Transmission timing configuration and/or information about a transmission timing.
(5) Information about a transmission destination node.
(6) Information about a node used for device data communication.
(7) Combination of (1) to (6).

(1) is information indicating from which device the device data is transmitted. The information may be, for example, information for identifying a device, for example, an identifier thereof. (1) may include one or more pieces of the above-described information. A list of pieces of information about one or more devices may be provided. The information about the device may be the number of devices. A maximum number of devices may be configured for the number of devices that transmit device data. In a case where the UE receives data from a predetermined number of devices, the UE may transmit the data, and therefore, the predetermined number of devices may be used.
(2) is information indicating from which group of devices the device data is transmitted. The information may be information for identifying a device group, for example, an identifier thereof. (2) may include one or more pieces of the above-described information. A list of pieces of information about one or more device groups may be provided. The information may be information that associates a device group identifier with a device identifier belonging to the group.
(3) is information indicating from which service device the device data is transmitted. The information may be information for identifying a service, for example, an identifier thereof. (3) may include one or more pieces of the above-described information. A list of pieces of information about one or more services may be provided. The information may be information that associates a service identifier with a device identifier for the service.
(4) is information about a timing configuration for transmitting the device data from the UE. Eight examples of information about a transmission timing configuration are disclosed below.

(4-1) Transmission time configuration.
(4-2) Periodic transmission.
(4-3) After UE-device communication is terminated.
(4-4) After a time configured for UE-to-device communication is terminated.
(4-5) After device data is received.
(4-6) Event trigger.
(4-7) After a device data transmission indication is received.
(4-8) Combination of (4-1) to (4-7).

In the case of (4-1), the UE transmits the device data at a configured transmission time. The transmission time may include, for example, a transmission start time, a transmission termination time, a transmission duration time, and the like. The transmission time may be included in the information about the transmission timing. This enables to flexibly configure the timing of device data transmission from the UE.

In the case of (4-2), the UE transmits the device data at a configured periodicity. Information on a periodicity and offset may be included in the information about the transmission timing. For example, this is useful in a case where UE-device communication is periodic. The periodicity may be equal to or an integer multiple of a periodicity configured in the configuration for UE-device communication. The standards, etc. may statically define that the periodicity may be equal to or an integer multiple of a periodicity configured in the configuration for UE-device communication. This simplifies control.

In the case of (4-3), the UE transmits the device data after UE-device communication is terminated. It may be configured that the UE transmits the device data immediately after the communication is terminated. Alternatively, it may be configured to transmit the device data after a predetermined period of time has elapsed since the communication is terminated. For example, this configuration can be applied to a case where UE-device communication is not periodic. The predetermined period of time may be included in the information about the transmission timing. If the predetermined period of time is set to 0, it may be configured to transmit the device data immediately after the predetermined period of time has elapsed since the communication is terminated.

In the case of (4-4), the UE transmits the device data after a time configured for UE-device communication is terminated. It may be configured that the UE transmits the device data immediately after the time configured for communication is terminated. Alternatively, it may be configured to transmit the device data after a predetermined period of time has elapsed since the time configured for communication is terminated. The predetermined period of time may be included in the information about the transmission timing. If the predetermined period of time is set to 0, it may be configured to transmit the device data immediately after the predetermined period of time has elapsed since the time configured for communication is terminated. As the time configured for UE-device communication, the information included in the configuration information for UE-device communication may be used.

In the case of (4-5), the UE transmits the device data after receiving the device data. It may be configured that the UE transmits the device data immediately after receiving the device data. Alternatively, it may be configured to transmit the device data after a predetermined period of time has elapsed since the device data is received. For example, this configuration can be applied to a case where it is not known when UE-device communication is performed. The predetermined period of time may be included in the information about the transmission timing. If the predetermined period of time is set to 0, it may be configured to transmit the device data immediately after receiving the device data.

In the case of (4-6), the UE transmits the device data when a condition configured in an event trigger is satisfied. Five examples of the event trigger condition are disclosed below. The event trigger condition may be included in the configuration information for device data transmission.

(4-6-1) Device data amount.
(4-6-2) Number of devices.
(4-6-3) Number of times device data is received.
(4-6-4) Number of communications with a device.
(4-6-5) Combination of (4-6-1) to (4-6-4).

Regarding (4-6-1), when the UE has received a predetermined amount of device data, the UE transmits the device data. The predetermined amount of device data may be configured for each device. For example, it can be configured according to characteristics of each device. The predetermined amount of device data may be configured for each device or for each two or more devices. For example, this enables to reduce the amount of configuration information. The predetermined amount of device data may be configured for each device group. For example, this enables control using the total device data amount of one or more devices belonging to a device group. The predetermined amount of device data may be configured for each service. For example, this enables control using the total device data amount of one or more devices for a certain service. The predetermined amount of device data may be configured per UE. For example, this configuration may be applied to a case where it is not predetermined which device the UE is to communicate with.

Regarding (4-6-2), when the UE receives device data from a predetermined number of devices, the UE transmits the device data received from the devices. The predetermined number of devices may be configured for each device group, for each service, or for each UE. This provides the technical advantages as described above.

Regarding (4-6-3), when the UE has received the device data from the device a predetermined number of times, the UE transmits the device data received from the device. There may be one or more devices. The predetermined number of times the device data is received may be configured for each device, for one or more devices, for each device group, for each service, or for each UE. This provides the technical advantages as described above.

Regarding (4-6-4), when the UE has communicated with the device a predetermined number of times, the UE transmits the device data received from the device. There may be one or more devices. The predetermined number of times the UE communicates with the device may be configured for each device, for one or more devices, for each device group, for each service, or for each UE. This provides the technical advantages as described above.

The predetermined amount may be included in the configuration information for device data transmission.

In the case of (4-7), when the UE receives the device data transmission indication from the base station, the UE transmits the device data. It may be configured that the UE transmits the device data immediately after receiving the device data transmission indication. Alternatively, it may be configured to transmit the device data after a predetermined period of time has elapsed since the device data transmission indication is received. The predetermined period of time may be included in the information about the transmission timing. If the predetermined period of time is set to 0, it may be configured to transmit the device data immediately after the communication is terminated. The predetermined period of time may be included in the configuration information for device data transmission. The base station can indicate the timing of device data transmission from the UE. The device data transmission timing can be dynamically controlled.

(5) is information about a transmission destination node of the device data. The information may indicate to which node the device data is to be transmitted. It may indicate a node to which the device data is transmitted directly, or a node to which the device data is transmitted indirectly. The transmission destination node may be, for example, an AS, a CN node, a MnS, a base station, or the like. The CN node may be, for example, an NF (Network Function), an AMF, an SMF, an UPF, an NWDAF (Network Data Analytics Function), an NEF, or the like. There may be provided a node (this may be an entity or function) for managing (or collecting) the device data in the CN. Hereinafter, the node is referred to as a "DMF (Device Management Function)". The MnS may be a MaS. There may be provided a node (this may be an entity or function) for managing (or collecting) the device data in the MnS. Hereinafter, the node is referred to as a "DCE (Device data Collection Entity)". In this way, the UE can recognize to which node the UE should transmit the device data.

Regarding (6), the node is, for example, a base station, a CN node, a MnS, an AS, an AF, or the like. Information about the node used for device data communication in (6) may be, for example, information about a transmission route of the device data. The information may include one or more transmission destination nodes. For example, the information may include information about a device or UE that is a transmission source of the device data. For example, the information may include information about a device, a UE, a base station, an AMF, a NEF (Network Exposure Function), an AF, and the like. There may be provided information for identifying the transmission route of the device data, for example, an identifier thereof. An identifier for the transmission route of the device data may be associated with an identifier or address of a node included in the transmission route. There may be provided one or more configurations for the transmission route of the device data. In this way, the UE can recognize the device data transmission route.

One or a plurality of configurations for device data transmission disclosed above may be provided. There may be provided information for identifying the configuration for device data transmission, for example, an identifier thereof. The base station may transmit the identifier to the UE in association with the configuration. A list of one or a plurality of configurations may be provided. The list may include an identifier for one or a plurality of configurations to be configured.

Upon receiving the configuration for device data transmission from the base station, the UE transmits the device data using the configuration information.

The UE may transmit, to the base station, a request relating to the configuration for UE-device communication. In a case where the UE does not have the configuration for UE-device communication, the UE may transmit the request. Even in a case where the UE has the configuration for UE-device communication, the UE may transmit the request for reconfiguration. The base station that has received the request can recognize that the UE is requesting the configuration for UE-device communication. Upon receiving the request, the base station may configure UE-device communication for the UE, and transmit the configuration to the UE.

The UE may transmit, to the base station, a request relating to the configuration for device data transmission. The method for the configuration for UE-device communication as disclosed above may be applied as appropriate. This provides the technical advantages as described above.

The UE may transmit, to the base station, a request for starting UE-device communication. The request may be the request relating to the configuration for UE-device communication. The base station that has received the request can recognize that the UE is requesting UE-device communication. Upon receiving the request, the base station may configure UE-device communication for the UE, and transmit the configuration to the UE.

The UE may transmit, to the base station, a request for starting device data transmission. The method for the request for starting UE-device communication as disclosed above may be applied as appropriate. This provides the technical advantages as described above.

The UE may transmit, to the base station, an activation/deactivation (hereinafter referred to as act/deact) request relating to the configuration for UE-device communication. In a case where the base station has already configured one or more configurations for UE-device communication, the base station that has received the request may transmit the configuration to be activated/deactivated. The UE can perform UE-device communication by using the configuration.

The UE may transmit, to the base station, an act/deact request relating to the configuration for device data transmission. In a case where the base station has already configured one or more configurations for device data transmission, the base station that has received the request may transmit the configuration to be activated/deactivated. The UE can perform device data transmission by using the configuration.

The base station may transmit, to the UE, a start/termination indication for UE-device communication. The base station may transmit an identifier of the configuration for UE-device communication used for communication to be started/terminated. For example, the base station may transmit the identifier together with the indication or transmit the indication including the identifier.

The base station may transmit, to the UE, a start/termination indication for device data transmission. The base station may transmit an identifier of the configuration for device data transmission used for communication to be started/terminated. For example, the base station may transmit the identifier together with the indication or transmit the indication including the identifier.

The base station may transmit, to the UE, an act/deact relating to the configuration for UE-device communication. The base station may transmit an identifier of the configuration for UE-device communication to be activated/deactivated. In a case where one or more configurations for UE-device communication have been already configured, it is no longer necessary to have all configurations enabled. This simplifies UE processing and reduces power consumption.

The base station may transmit, to the UE, an act/deact relating to the configuration for device data transmission. The base station may transmit an identifier of the configuration for device data transmission to be activated/deactivated. In a case where one or more configurations for device data transmission have been already configured, it is no longer necessary to have all configurations enabled. This simplifies UE processing and reduces power consumption.

The base station may reconfigure, for the UE, the configuration for UE-device communication. The base station may modify the configuration for UE-device communication for the UE. In a case where the base station may modify the configuration for UE-device communication for the UE, the base station may notify the UE of part or all of pieces of information about the configuration. The base station may notify the UE of only pieces of information to be modified, as part of pieces of information about the configuration. The above-described configuration method for UE-device communication may be appropriately applied to the method for the base station to reconfigure or modify the configuration for UE-device communication for the UE.

The base station may reconfigure, for the UE, the configuration for device data transmission. The base station may modify the configuration for device data transmission for the UE. In a case where the base station may modify the configuration for device data transmission for the UE, the base station may notify the UE of part or all of pieces of information about the configuration. The base station may notify the UE of only pieces of information to be modified, as part of pieces of information about the configuration. The above-described configuration method for device data transmission may be appropriately applied to the method for the base station to reconfigure or modify the configuration for device data transmission for the UE.

The base station may reconfigure, for the UE, configuration used for UE-device communication. The base station may modify the configuration used for UE-device communication for the UE. The base station may transmit, to the UE, an identifier of the configuration used for UE-device communication. The base station may transmit, to the UE, an identifier of a modified configuration used for UE-device communication.

The act/deact may be used for the above-described reconfiguration or modification. The base station may deactivate, for the UE, the configuration before modification which is currently used for UE-device communication. The base station may transmit an identifier of the configuration to be deactivated. The base station may activate for the UE, the configuration after modification which is to be used for UE-device communication. The base station may transmit an identifier of the configuration to be activated.

The act/deact may be used for the above-described reconfiguration or modification. The base station may deactivate, for the UE, the configuration before modification which is currently used for device data transmission. The base station may transmit an identifier of the configuration to be deactivated. The base station may activate, for the UE, the configuration after modification which is to be used for device data transmission. The base station may transmit an identifier of the configuration to be activated. This enables to reconfigure the configuration used for UE-device communication early. The UE and/or base station may discard the configuration that has been deactivated for a predetermined period of time. The base station may notify the UE of the predetermined period of time. The predetermined period of time may be included, for example, in the configuration for UE-device communication. For example, this enables to reduce the memory amount of the UE.

The base station may reconfigure or modify the configuration for UE-device communication when indicating, to the UE, start/termination for UE-device communication. The base station may reconfigure or modify the configuration for device data transmission when indicating, to the UE, start/termination for device data transmission. The above-described methods may be applied as appropriate.

The above embodiments allow to reconfigure or modify the configuration, and therefore, flexible control suited to the communication situation can be performed.

A method for releasing the configuration for UE-device communication will be disclosed. The base station notifies the UE of release of the configuration for UE-device communication. The above-described methods for notifying the configuration for UE-device communication may be applied to the method for notifying the release as appropriate. The UE can receive the release of the configuration for UE-device communication. Upon receiving the release of the configuration for UE-device communication, the UE releases the configuration for UE-device communication being currently configured. The release notified to the UE by the base station may include information for identifying the configuration for UE-device communication to be released. The UE that has received the release may use the information to identify the configuration for UE-device communication to be released. Upon receiving the release of the configuration for UE-device communication, the UE may release all the configurations for UE-device communication being currently configured.

Upon receiving the release of the configuration for UE-device communication, the UE releases the configuration for UE-device communication. The UE may discard the configuration information for UE-device communication to be released. By releasing the configuration in this manner, for example, in a case where UE-device communication is not performed, the UE does not need to retain unnecessary configurations for UE-device communication. The memory and the like of the UE can be used efficiently.

The base station may notify the UE of the release of the configuration for device data transmission. For the method for notifying the release, the above-described method for notifying the configuration for device data transmission may be applied. The UE can receive the release of the configuration for device data transmission. Upon receiving the release of the configuration for device data transmission, the UE releases the configuration for device data transmission being currently configured. The release notified to the UE by the base station may include information for identifying the configuration for device data transmission to be released. The UE that has received the release may use the information to identify the configuration for device data transmission to be released. Upon receiving the release of the configuration for device data transmission, the UE may release all the configurations for device data transmission being currently configured.

After releasing the configuration for device data transmission, the UE may clear the device data remaining in a buffer. The UE can use the buffer capacity of the UE for other purposes at an early stage. In another method, after releasing the configuration for device data transmission, the UE may transmit the device data remaining in the buffer. For example, the UE may transmit the device data until there is no more device data in the buffer. For example, the UE may release the configuration for device data transmission at the end of service. This allows the UE to transmit the device data up to the end of service.

Configuration for the processing of transmitting the device data in the buffer after receiving the release of the configuration for device data transmission described above may be provided. The base station may notify the UE of the transmission processing method. For example, regarding information about the transmission processing method, the base station may include the transmission processing method in the configuration for UE-device communication or the configuration for device data transmission, and transmit it to the UE. This enables flexible control suitable for the situations of the UE and base station and the service contents.

Upon receiving the configuration for UE-device communication, the UE starts UE-device communication. Upon receiving the release of the configuration for UE-device communication, the UE terminates the UE-device communication. In another method, the UE may start UE-device communication upon receipt of the start indication for UE-device communication. The UE may terminate the UE-device communication upon receipt of the termination indication for UE-device communication. In another method, the UE may start UE-device communication upon receipt of the act relating to the configuration for UE-device communication. The UE may terminate the UE-device communication upon receipt of the deact relating to the configuration for UE-device communication.

Information indicating whether or not the device data is terminated may be provided. For example, the device may generate the information. The device may notify the UE of the information indicating whether or not the device data is terminated. In another method, the UE may generate the information. The UE may transmit the information to the base station. The base station may send the information to the CN node. The information may be transmitted together with the device data or separately from the device data. In this way, the UE, base station or CN node that has received the information can recognize that the transmission of device data from the device has ended.

The UE may store the device data received from the device. A buffer for storing the device data may be provided in the UE. The device data may be stored, for example, on a per-device or per-device group basis. The device data may be stored in association with a device identifier or device group identifier. The device data may be stored, for example, per UE-device communication. This enables flexible control in handling the device data and in transmitting the device data from the UE to the base station.

An upper limit may be configured on the number of UE-device communications to receive the device data corresponding to a single data transmission to the base station. For example, when the number of communications exceeds the upper limit, the UE may not store the device data. Alternatively, when the number of communications reaches the upper limit, the UE may not perform further UE-device communication. Alternatively, when the number of communications exceeds the upper limit, the UE may clear the oldest device data. The UE may clear the oldest device data and store device data acquired in new UE-device communication. When the device data is transmitted, the number of communications may be cleared. The device data may be transmitted when the UE-device communication has been performed a predetermined number of times. For example, the limit can be configured on the number of UE-device communications to simplify control for the UE.

A lower limit may be configured on the number of UE-device communications to receive the device data corresponding to a single data transmission to the base station. For example, when the number of communications falls below the lower limit, the UE may not transmit the device data. Alternatively, when the number of communications reaches the lower limit, the UE may transmit the device data. When the UE transmits the device data, the number of communications may be cleared. For example, by limiting the number of UE-device communications required for device data transmission, the device data communication load from the UE to the base station can be reduced.

The base station may transmit the upper limit and/or lower limit for the number of communications to the UE. The upper limit and/or lower limit may be included in the configuration for UE-device communications or the configuration for device data transmission. The upper and lower limits for the number of communications can be configured. This enables flexible control.

The UE transmits the device data to the base station using the configuration for device data transmission received from the base station. The UE starts transmitting the device data upon receipt of the configuration for device data transmission. The UE terminates transmitting the device data upon receipt of the release of the configuration for device data transmission. In another method, the UE may start transmitting the device data upon receipt of the start indication for device data transmission. The UE may terminate the device data transmission upon receipt of the termination indication for device data transmission. In another method, the UE may start transmitting the device data upon receipt of the act relating to the configuration for device data transmission. The UE may terminate the device data transmission upon receipt of the deact relating to the configuration for device data transmission.

A method of transmitting the device data from the UE to the base station will be disclosed. The UE may transmit the device data to the base station using RRC signaling. An RRC message including the device data may be transmitted. A larger amount of data can be transmitted. The device data may be included, for example, in an ULInformationTransfer message or RRCReconfigurationComplete message and transmitted. The UE may include the device data in a NAS message and transmit it using RRC signaling, for example. In another method, an RRC message for device data transmission may be newly provided. This enables to provide a message suitable for the configuration for device data transmission and the device data to be transmitted.

Another method will be disclosed. The UE may transmit the device data to the base station using MAC signaling. For example, a MAC CE including the device data may be transmitted. The UE may multiplex the device data with other MAC data and transmit them to the base station. This enables efficient transmission because the device data can be transmitted together with other data.

Another method will be disclosed. The UE may transmit the device data to the base station using L1/L2 signaling. For example, the device data may be included in UCI. The UE may include the device data in the UCI and transmit it on the PUCCH. This enables device data communication between the UE and the base station earlier.

Another method will be disclosed. The UE may transmit the device data to the base station in Random Access (RA) processing. For example, the UE may include the device data in a Msg3 and transmit it in 4-step RA process, or may include the device data in a MsgA and transmit it in 2-step RA process. This enables device data communication between the UE and the base station earlier.

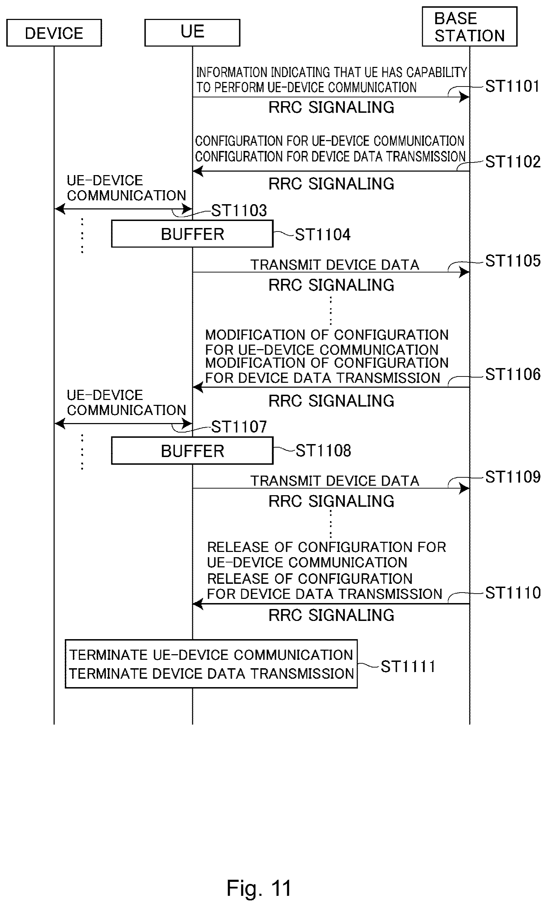

Fig. 11 is a diagram illustrating a sequence example in which the UE transmits device data acquired from the device to the base station. In Step ST1101, the UE being connected to the base station (may be in RRC_Connected state) notifies the base station of information indicating that the UE has the capability to perform communication with the device. The information indicating that the UE has the capability to perform communication with the device may be information indicating that the UE supports a RAT (Radio Access Technology) or communication method used for communication with the device. The information may be the number of devices with which the UE can communicate. The information may be information about a frequency for communication with the device. The information about the frequency for communication may be a frequency band. The information may be a combination of the above-described pieces of information. The information may be included in UE capability.

In Step ST1102, the base station transmits, to the UE, the configuration for UE-device communication and the configuration for device data transmission. For example, RRC signaling may be used for this transmission. For example, an RRCReconfiguration message including the configurations may be transmitted. The UE that has received the configurations can receive configuration information for communication with the device and configuration information for transmitting device data to the base station. In Step ST1103, the UE that has received the configuration for UE-device communication communicates with the device using the configuration information. For example, in a case where UE-device communication is configured to be performed periodically, the UE communicates with the device periodically. Upon receiving data from the device, the UE stores the device data in Step ST1104. The device data may be stored in the buffer provided in the UE. The device data may be stored in the buffer until the device data is transmitted to the base station.

In Step ST1105, the UE transmits the device data to the base station using the configuration for device data transmission received in Step ST1102. For example, in a case where the UE is configured to transmit the device data in the same periodicity as the periodicity of UE-device communication, the UE transmits the device data received in each periodicity to the base station. For example, in a case where the UE is configured to transmit the device data when the amount of device data stored in the buffer exceeds a predetermined amount, the UE transmits the device data to the base station when the amount of device data stored in UE-device communication exceeds the predetermined amount. The base station can receive the device data transmitted from the UE. The configuration for device data transmission transmitted in Step ST1102 may be transmitted using separate signaling from signaling for the configuration for UE-device communication. For example, RRC signaling may be used for the device data transmission in Step ST1105. For example, an RRCReconfigurationComplete message including the device data may be transmitted.

The UE may store device data-related information. The UE may transmit the device data-related information to the base station. The details of the device data-related information will be described later. In Step ST1104, the UE may store the device data-related information together with the device data. In Step ST1105, the UE may transmit the device data-related information to the base station. For example, in a case where the configuration for device data transmission includes configuration information for transmitting the device data-related information, the UE may store the device data-related information together with the device data in Step ST1104, and transmit the device data-related information together with the device data in Step ST1105. The base station can receive the device data-related information.

In a case where the configuration for UE-device communication and/or the configuration for device data transmission are modified, the base station transmits the respective modifications of the configurations to the UE in Step ST1106. For example, RRC signaling may be used for transmitting the configuration modifications. For example, an RRCReconfiguration message including the configuration modifications may be transmitted. Upon receiving the modification of the configuration for UE-device communication, the UE communicates with the device using the modified configuration information in Step ST1107. Upon receiving data from the device, the UE stores the device data in Step ST1108.

The UE transmits the device data to the base station in Step ST1109 using the modification of the configuration for device data transmission received in Step ST1106. The base station can receive the device data transmitted from the UE. The modification of the configuration for device data transmission sent in Step ST1106 may be transmitted using separate signaling from signaling for the modification of the configuration for UE-device communication. For example, RRC signaling may be used for the device data transmission in Step ST1109. For example, an RRCReconfigurationComplete message including the device data may be transmitted.

In Step ST1109, the UE may transmit the device data-related information to the base station. The base station can receive the device data-related information.

In Step ST1110, the base station transmits, to the UE, release of the configuration for UE-device communication and release of the configuration for device data transmission. For example, RRC signaling may be used for this transmission. For example, an RRCReconfiguration message including the release configurations may be transmitted. Upon receiving the release of the configuration for UE-device communication, the UE terminates the UE-device communication at Step ST1111. Upon receipt of the release of the configuration for device data transmission, the UE terminates the device data transmission to the base station in Step ST1111. The release of the configuration for device data transmission may be transmitted in separate signaling from signaling for the release of the configuration for UE-device communication. The method disclosed above may be applied to the transmission processing of the device data in the buffer when the UE receives the release of the configuration for device data transmission.

The above embodiment enables UE-device communication and transmission of device data received from the device to the base station. The base station can receive the device data from the device via the UE. This enables communication between the device and the NW.

The PUSCH may be used for device data transmission from the UE to the base station. The UE transmits the device data to the base station on the PUSCH. The UE may transmit a Scheduling Request (SR) to the base station to request scheduling of PUSCH for device data transmission. The base station that has received the SR may transmit, to the UE, scheduling information relating to the PUSCH for device data transmission. Upon receiving the scheduling information relating to the PUSCH for device data transmission from the base station, the UE transmits the device data with the PUSCH using the information.

The base station may transmit, to the UE, DCI including the scheduling information relating to the PUSCH for device data transmission. A new DCI may be provided for scheduling relating to the PUSCH for device data transmission. The DCI including the scheduling information relating to the PUSCH for device data transmission may be detected using an RNTI (Radio Network Temporary Identifier) of the UE. In another method, the RNTI for device data transmission may be different from an RNTI for data transmission of existing services. A new RNTI may be provided for detecting the DCI including the scheduling information relating to the PUSCH for device data transmission. The UE can recognize whether DCI is scheduling information for device data transmission or scheduling information for data transmission of existing services. The UE can selectively receive those DCIs.

The base station may preconfigure, for the UE, the PUSCH for device data transmission. For example, the base station may configure a CG (Configured Grant) for device data transmission. The CG for device data transmission may be CG type 1 or CG type 2. This enables to reduce the amount of signaling. Further, since the SR is not required, the device data can be transmitted early at a device data transmission timing from the UE to the base station. The base station may transmit, to the UE, the configuration for device data transmission including the CG configuration. The configuration for device data transmission and the CG configuration used for device data transmission may be transmitted in association with each other. The UE can recognize which CG configuration is to be used for device data transmission.

When the PUSCH for device data transmission is configured using the CG, an RNTI for the CG may be provided. The UE may detect and receive DCI for the CG using the RNTI for the CG. This allows the UE to selectively receive either DCI used for the CG for device data transmission or DCI for the CG used for data transmission of existing services.

A case where the UE communicates with a plurality of devices will be disclosed. The configuration for UE-device communication is provided for each device. The configuration information for UE-device communication may be provided per device. This enables to configure the configuration information for UE-device communication suitable for each device. The configuration for device data transmission may be provided for each device. The configuration information for device data transmission may be provided per device. This enables to configure the configuration information for device data transmission suitable for device data of each device.

The UE may store device data for each device. The UE may store a device identifier and device data in association with each other. This allows to identify which device the device data belongs to. The UE may transmit the device data for each device to the base station. The UE transmits the device data to the base station using the configuration for device data transmission for each device.

In this way, the UE can transmit the device data acquired from each device to the base station even when the UE communicates the plurality of devices. This enables configurations for UE-device communication and device data transmission that are suitable for services using devices, and therefore, the QoS required for each service can be satisfied, for example.

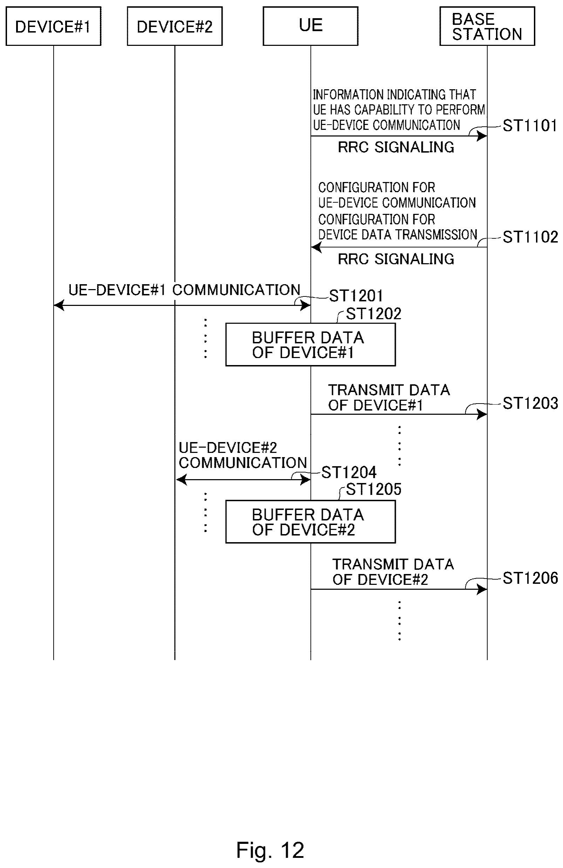

Fig. 12 is a diagram illustrating a sequence example in which the UE transmits device data acquired from a plurality of devices to the base station. The example in Fig. 12 illustrates two devices (device #1 and device #2). The steps common to those of Fig. 11 are denoted by the same step numbers, and common description is omitted.

In Step ST1102, the base station transmits, to the UE, the configuration for UE-device communication and configuration for device data transmission for each device. In Step ST1201, the UE communicates with the device #1 using the configuration for UE-device communication configured for the device #1. In Step ST1202, the UE stores the device data received from the device #1 in the buffer of the UE. In Step ST1203, the UE transmits the device data to the base station using the configuration for device data transmission for the device #1 received in Step ST1102. The base station can receive the device data of the device #1 transmitted from the UE.

In Step ST1204, the UE communicates with the device #2 using the configuration for UE-device communication configured for the device #2. In Step ST1205, the UE stores the device data received from the device #2 in the buffer of the UE. In Step ST1206, the UE transmits the device data to the base station using the configuration for device data transmission for the device #2 received in Step ST1102. The base station can receive the device data of the device #2 transmitted from the UE.

The example in Fig. 12 illustrates that the UE-device #2 communication is performed after the UE-device #1 communication. However, the UE-device #1 communication period and the UE-device #2 communication period may overlap. For example, the UE-device #1 communication and the UE-device #2 communication may be alternately performed.

The configuration for device data transmission transmitted in Step ST1102 may be transmitted using separate signaling from signaling for the configuration for UE-device communication. In Steps ST1203 and ST1206, the UE may transmit device data-related information for each device to the base station. The base station can receive the device data-related information for each device.

Information indicating whether or not the device data is terminated may be provided for each device. The device may generate the information and transmit it to the UE. In another method, the UE may generate the information. The UE may transmit the information to the base station. The information may be transmitted together with the device data or separately from the device data. In this way, the UE or base station that has received the information can recognize that the transmission of device data from the device has been terminated.

In this way, the UE can communicate with the plurality of devices and transmit the device data received from the plurality of devices to the base station. The base station can receive the device data from the plurality of devices via the UE. This enables to communicate between the plurality of devices and the NW.

Another method in which the UE communicates with the plurality of devices will be disclosed. The configuration for UE-device communication is shared between the plurality of devices. The configuration information for UE-device communication is commonly used among the plurality of devices. One configuration for UE-device communication may be provided. The same configuration is used for communication between one or more devices and the UE. For example, the UE may communicate with one or more devices within a configured period for UE-device communication.

The configuration for device data transmission is shared between the plurality of devices. The configuration information for device data transmission is commonly used among the plurality of devices. One configuration for device data transmission may be provided. The same configuration is used for transmitting device data of one or more devices. For example, the UE may transmit device data of one or more devices in a configured periodicity for device data transmission.

This enables to reduce the amount of information required for configuration. Since it is possible to communicate with one or more devices with the same configuration and to transmit device data, the complexity of the UE control can be reduced.

The UE may store pieces of device data for one or more devices collectively. The UE may store a device identifier and device data in association with each other. Even in a case where the pieces of device data for one or more devices are stored collectively, the UE can recognize which device the piece of device data belongs to. The UE may transmit information indicating which device the piece of device data belongs to, together with the piece of device data. For example, the UE may associate the device identifier with the piece of device data, and transmit them to the base station. In this way, the base station can recognize which device the piece of device data belongs to.

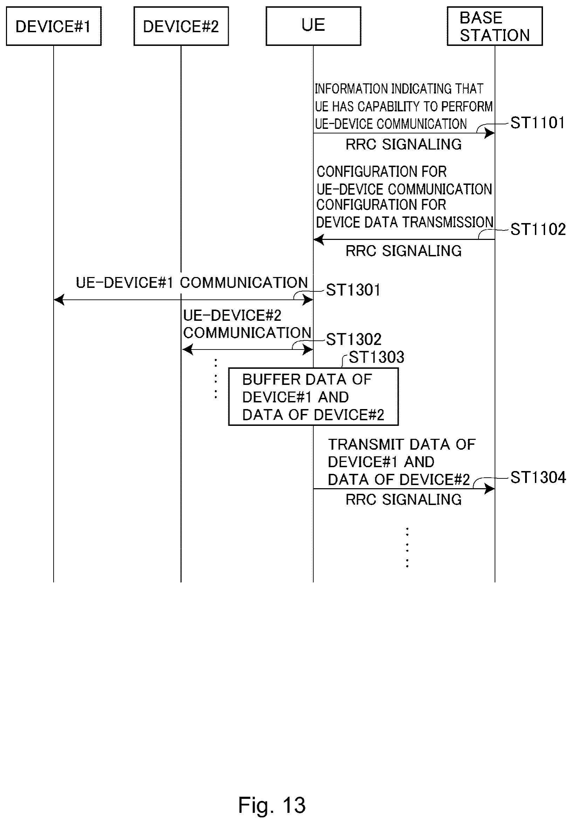

Fig. 13 is a diagram illustrating another sequence example in which the UE transmits device data acquired from a plurality of devices to the base station. The example in Fig. 13 illustrates two devices (device #1 and device #2). The steps common to those of Fig. 11 are denoted by the same step numbers, and common description is omitted.

In Step ST1102, the base station transmits, to the UE, one configuration for UE-device communication and one configuration for device data transmission. Using the received configuration for UE-device communication, the UE communicates with the device #1 in Step ST1301 and communicates with the device #2 in Step ST1302. For example, in a UE-device communication time configured in the configuration for UE-device communication, the communication between the UE and the device #1 in Step ST1301 and the communication between the UE and the device #2 in Step ST1302 are performed.

In Step ST1303, the UE stores device data received from each of the devices #1 and #2 in the buffer of the UE. The UE may store the device data received from each device in association with an identifier of each device. This allows to recognize which device the device data is received from. In Step ST1304, the UE transmits the device data for each of the devices #1 and #2 to the base station using the configuration for device data transmission received in Step ST1102. The UE may transmit the device data of each device in association with the identifier of each device. This enables to recognize which device the device data corresponds to. The base station can receive the device data of each of the devices #1 and #2 transmitted from the UE.

The configuration for device data transmission transmitted in Step ST1102 may be transmitted in separate signaling from signaling for the configuration for UE-device communication. In Step ST1304, the UE may transmit device data-related information of each device to the base station. The device data-related information of each device may be transmitted in association with the device identifier. The base station can receive the device data-related information of each device.

Information indicating whether or not device data from the plurality of devices is terminated may be provided. The UE may generate the information. This is useful when the UE transmits the device data of the plurality of devices collectively. The UE may transmit the information to the base station. The information may be transmitted together with the device data or separately from the device data. In this way, the UE or base station that has received the information can recognize that the transmission of device data from each device has been terminated.

In this way, the UE can communicate with the plurality of devices and transmit the device data received from each of the plurality of devices to the base station. The base station can receive the device data from each of the plurality of devices via the UE. This enables communication between the plurality of devices and the NW. In addition, control can be facilitated because there is no need to configure each device or to transmit device data per device.

The methods disclosed above may be combined as appropriate. In the example of Fig. 13, the base station transmits, to the UE, one configuration for UE-device communication and one configuration for device data transmission. However, either one of the configurations may be configured per device as shown in the example of Fig. 12. For example, the base station may transmit one configuration for UE-device communication to the UE, and transmit the configuration for device data transmission for each device to the UE. The UE-device communication is performed using one configuration received by the UE. The UE may transmit device data of each device stored in the buffer of the UE to the base station using the configuration for device data transmission for each device. The above appropriate combination of the methods enables flexible control more suitable for services using the devices.

The UE may communicate with the device that can communicate in a configured period for UE-device communication. The UE may communicate with a device that has not been explicitly indicated to the UE in advance. For example, the UE may communicate with a device detected by the UE itself in the configured period for UE-device communication. In this way, the UE can receive device data from the device with which the UE can communicate. The base station can receive the device data from the device with which the UE can communicate.

Another method will be disclosed for a case where the UE communicates with the plurality of devices. The configuration for UE-device communication may be configured for each device group including one or more devices. The configuration information for UE-device communication may be configured per device group including one or more devices. The UE communicates with one or more devices included in the device group using the same configuration. For example, the UE may communicate with one or more devices included in the device group in the configured period for UE-device communication.

The configuration for device data transmission may be configured for each device group including one or more devices. The configuration information for device data transmission may be configured per device group including one or more devices. The UE transmits device data of one or more devices included in the device group using the same configuration. For example, the UE may transmit device data of one or more devices included in the device group in the configured periodicity for device data transmission.

This enables to reduce the amount of information required for configuration. Since it is possible to communicate with one or more devices and transmit device data with the same configuration, the complexity of UE control can be reduced. In addition, by providing the configuration for each device group, it is possible to make configuration more suitable for each device group.

For example, the device group may be provided for each service. A device group including devices used for a certain service may be provided. For example, the device group may be provided for each area. A device group including devices in a certain area may be provided. Device groups may be predefined. In another method, a NW node may determine device groups. Information for identifying a device group, for example, an identifier, may be provided. A device group identifier and an identifier of each device included in the device group may be associated with each other. The NW node transmits information about one or more device groups to the UE. The information about the device group may include, for example, information about devices included in the device group, information about a service, information about an area, and the like. The above pieces of information may be included in the configuration for UE-device communication or in the configuration for device data transmission. The UE can recognize which device group the configuration is configured for.

Depending on each service, the configuration for UE-device communication and/or the configuration for device data transmission may be configured individually for each UE, commonly for a plurality of UEs, or for each group. The base station may make such configuration for each service that uses devices for communication. The NW node may make such configuration. This allows for flexible configuration more suitable for each service.

The UE may store device data received from devices in association with the device group identifier. For example, the UE can store the device data per service or per area. The UE may store data received from devices in association with the device group identifier and the device identifier. This enables to store the device data not only for each device group but also for each device.

The UE transmits the device data to the base station using the configuration for device data transmission configured for each device group. The UE may transmit the device data received from one or more devices included in the device group to the base station. The UE may associate the device group identifier and device data with each other, and transmit them to the base station. The base station can recognize which device group the device data is received from. The UE may associate the device group identifier, device identifier and device data with each other, and transmit them to the base station. The base station can recognize not only which device group the device data belongs to but also which device the device data belongs to.

The device data-related information may be transmitted together with the device data. The device data-related information may be transmitted separately from the device data. Twenty examples of the device data-related information will be disclosed below.

(1) Device data identifier.
(2) Device group identifier.
(3) Information about a service.
(4) Information about an area.
(5) Information about a PDU session.
(6) Information about a network slice.
(7) Information about a transmission destination of device data.
(8) Location information.
(9) Information about a time for UE-device communication.
(10) Information about the number of UE-device communications.
(11) Reception quality.
(12) Information about a PLMN or NPN.
(13) Information about a TA.
(14) Information about an RNA.
(15) Information about a base station or a cell.
(16) Information about a beam.
(17) Information on a time of device data.
(18) Device identifier.
(19) Information about interference.
(20) Combination of (1) through (19).

(1) is information for identifying the device data. The information may be appended to the device data. For example, it may be provided as a header of the device data. As the information, the numbering in the order of transmission from the device may be provided. In this way, the UE or NW node, etc. that has received the device data can arrange the device data in the order of transmission, even if, for example, the order in which the device data is received is different from the order of transmission.

(3) is information indicating from which service device the device data has been received. The information may be, for example, a service identifier. (4) is information indicating from which area the device data has been received. The information may be, for example, an area identifier. (5) is information about a PDU session configured for device data transmission. The information may be, for example, a PDU session identifier. (6) is information about a network slice configured for device data transmission. The information may be, for example, a network slice identifier. (7) is information indicating a transmission destination of the device data. The information indicating the transmission destination may be, for example, an identifier or an address. The device transmission destination may be, for example, the AMF, the UPF, the NWDAF, the NEF, the NF, the AF, or the AS. Identifiers or addresses corresponding to the respective transmission destinations may be used.

(8) may be, for example, information about a location of the UE. For example, it may be information about a location of the device. The information about the location of the device may be derived by the UE. The information about the location of the device may be derived by the device itself. The information about the location of the device derived by the device may be notified to the UE by the device. The information may, for example, be notified together with the device data.

(9) may be, for example, time stamp information indicating a time of UE-device communication. For example, the information may be information indicating a time at which the UE has received the device data. For example, the information may include a time at which the UE starts device data reception, a time at which the UE terminates the device data reception, and a time at which the UE has received the device data. (9) may be, for example, information indicating a time at which the device has transmitted the device data. For example, the information may include a time at which the device starts device data transmission, a time at which the device terminates the device data transmission, and a time at which the device has transmitted the device data. The information indicating the time at which the device has transmitted the device data may be notified by the device to the UE. The information may, for example, be notified together with the device data.

(10) is information indicating the number of times UE-device communication has been performed. The information may be information indicating the number of times the UE has received the device data in UE-device communication in order to obtain the device data to be transmitted from the UE.

(11) is a reception quality of a signal from the device, as measured by the UE. The reception quality may be, for example, received power, SINR, or SNR (Signal to Noise Ratio). The received power may be, for example, RSSI.

(12) is information indicating in which PLMN or NPN the UE is located. The information may be information for identifying the PLMN or NPN, for example, an identifier of the PLMN or NPN. (13) is information indicating in which TA the UE is located. The information may be information for identifying the TA, for example, a TAC. (14) is information indicating in which RNA the UE is located. The information may be information for identifying the RNA, for example, an identifier of the RNA. (15) is information about a base station or cell to which the UE is connected. The information may be information for identifying the base station or cell, for example, an identifier of the base station or cell. (16) is information about a beam with which the UE has communicated with the device. It may be information about a beam formed by the UE. It may be information about a beam formed by the base station. The information may be information for identifying the beam, for example, an identifier of the beam.

(17) is information indicating a time at which the device has acquired data. The information may include a time at which the device starts data acquisition, a time at which the device terminates the data acquisition, or a measurement time. In a case where the device is a temperature sensor, the information may be information indicating a time at which the device has acquired temperature data. The information indicating the time at which the device has acquired the data may be notified to the UE by the device. For example, the information may be notified together with the device data.

Identifiers such as the device data identifier in (1), the device group identifier in (2), and the device identifier in (18) may be identification information which can be recognized by a user. For example, the UE that has received the identification information from the device may display the identification information on a display device. Alternatively, the UE outputs the identification information in an audible manner. In this way, by providing the identification information recognizable to the user as an identifier, the user can recognize to which device the information is related, and so on.

(19) is information about interference in UE-device communication. For example, the information may be information about interference measured by the UE. It may be information about interference measured by the device. It may be information about interference caused by the transmission and reception of two or more radio schemes within the UE. The information about interference may include, for example, a radio scheme causing interference, a radio scheme being subject to interference, a frequency causing interference, a frequency being subject to interference, a time causing interference, a time being subject to interference, power causing interference, power being subject to interference, information about a device causing interference, and information about a device being subject to interference. The UE or NW node can acquire the information about interference. For example, the use of the above pieces of information enables to reduce the interference in UE-device communications.

Upon receiving the device data, the UE stores the device data. The UE may store the device data-related information together with the device data. The base station may configure, for the UE, the device data-related information to be stored together with the device data. Such configuration may be included in the configuration for UE-device communication or the configuration for device data transmission.

The device data-related information may be included in the device data or transmitted together with the device data. Alternatively, the device data-related information may be transmitted separately from the device data. The destination of device data-related information and the destination of device data may be the same or different. For example, in a case where a NW node uses the device data and also uses the device data-related information, the destination of device data-related information and the destination of device data may be the same. For example, in a case where a different NW node from a NW node using the device data uses the device data-related information, the destination of device data-related information and the destination of device data may be different. The UE transmits the device data-related information to the base station. The device may transmit the device data-related information to the UE. The UE that has received the information may transmit part or all of the received information to the base station. The base station can receive the device data-related information. In this way, for example, the UE or NW node can recognize the status of UE-device communication. The NW can obtain the device data-related information required for a service and can provide the service using the device.

The device data-related information may be configurable. The base station may transmit a configuration for device data-related information to the UE. The base station may send the configuration together with the configuration for UE-device communication or the configuration for device data transmission, or may send the configuration by including it in the configuration for UE-device communication or the configuration for device data transmission. Alternatively, the base station may transmit the configuration for device data-related information separately from the configuration for UE-device communication and configuration for device data transmission. For example, a transmission configuration for device data-related information may include information indicating which device data-related information is to be acquired or which device data-related information is to be transmitted. It is possible to configure the device data-related information required by the NW.

The above-described method for transmitting the configuration for device data transmission may be applied as appropriate to the method for transmitting the configuration for device data-related information from the base station to the UE. The same technical advantages can be gained.

One or more methods disclosed in the present embodiment enable UE-device communication. The UE can receive the device data. In addition, the UE can transmit the device data to the base station. The base station can receive the device data from the device. This enables communication between the device and the NW via the UE.

Furthermore, the base station configures the configuration for UE-device communication and configuration for device data transmission from the UE to the base station, which enables reduction in interference between UE-device communication and communication on the Uu or PC5. This enables high-quality and stable device data communication.

### Second Embodiment

In the 3GPP, the integration of ultra-low power consumption IoT devices into the mobile communication system has been discussed. In a configuration in which a device is incorporated into the mobile communication system, it is assumed that a UE being not connected to a base station is interposed between the device and the base station, and communication between the device and the base station has to be performed via the UE. A method for allowing such a UE to communicate with the device and the base station will be disclosed.

The present embodiment allows the UE being not in a connected state with the base station (may be in RRC_Idle or RRC_Inactive state) to communicate with the device. For example, the UE in the RRC_Idle or RRC_Inactive state communicates with the device. The UE stores device data after communicating with the device. The UE transitions to a connected state with the base station, and then, transmits the device data to the base station. For example, the UE transitions to RRC_Connected state, and transmits the device data to the base station. The UE may transmit the device data to the base station in a procedure for connecting with the base station. The UE may transmit the device data to the base station in a procedure for transitioning to the RRC_Connected state.

The base station transmits the configuration for UE-device communication to the UE in the connected state with the base station. The base station may transmit the configuration for device data transmission to the UE in the connected state with the base station. For transmitting the configurations, the method for transmitting the configurations as disclosed in the first embodiment may be applied as appropriate. When including the configuration information in an RRC message, for example, it may be included in a message for transitioning the UE from the RRC_Connected state to the RRC_Idle state, and the message may be transmitted. For example, it may be included in a message for transitioning the UE from the RRC_Connected state to the RRC_Inactive state, and the message may be transmitted. For example, it may be included and transmitted in an RRCRelease message with suspend. The UE in the connected state with the base station can receive, from the base station, the configuration for UE-device communication and the configuration for device data transmission from the UE to the base station.

In order to enable UE-device communication for a UE being not in the connected state, the base station may transmit the configuration for UE-device communication when the UE is in the RRC_Connected state. In order to enable a UE being not in the connected state to receive device data from the device and transmit the device data to the base station, the base station may transmit the configuration for device data transmission when the UE is in the RRC_Connected state.

The base station may include the configuration for UE-device communication and/or the configuration for device data transmission in the SIB, and broadcast it. The method disclosed in the first embodiment may be applied as appropriate. The UE, which is not in the connected state, receives the SIB including the information broadcast from the base station, and therefore, can receive the configuration for UE-device communication and/or the configuration for device data transmission. The UE in the RRC_Idle or RRC_Inactive state can communicate with the device by using the information.

The base station may notify the UE of the configuration for UE-device communication and/or the configuration for device data transmission by using both SIB broadcast and RRC signaling. For example, the base station may broadcast a part of the configuration information by using the SIB, and notify the UE of an RRC message including the remaining part by using dedicated RRC signaling. For example, information common to one or more UEs from among the configuration information is broadcast in the SIB, and information dedicated for the individual UE is included and transmitted in the RRC message. As mentioned above, notification in the RRC signaling may be performed when the UE is in the connected state. In this way, the amount of signaling can be reduced. The UE in the RRC_Idle or RRC_Inactive state can communicate with the device by using the information received in the SIB and RRC signaling.

The example of configuration information for UE-device communication disclosed in the first embodiment may be applied as appropriate. The example can be used even if the UE is in the RRC_Idle or RRC_Inactive state. The example of configuration information for device data transmission disclosed in the first embodiment may be applied as appropriate.

A cycle for UE-device communication configured for the UE may be an integer multiple of a DRX cycle. The DRX cycle may be a DRX cycle configured in the base station. The DRX cycle may be a DRX cycle configured for the UE. The DRX cycle may be a DRX cycle for receiving a paging. The timing of UE-device communication may be close to the reception timing in the DRX. For example, a time for UE-device communication may be close to a reception time in the DRX. For example, a time for UE-device communication may be configured such that the time for UE-device communication does not overlap with a reception time in the DRX. For example, the time for UE-device communication may be configured before or after the reception time in the DRX. The time for UE-device communication and the reception time in the DRX may be configured such that these times are continuous or discontinuous. The time for UE-device communication and the reception time in the DRX may be configured within a predetermined period of time. For example, an offset for UE-device communication timing may be an offset from the DRX reception time.

By associating the DRX cycle or reception timing in the DRX with the UE-device communication timing, the power consumption of the UE being not connected to the base station can be reduced when the UE performs the UE-device communication.

Upon receiving the device data, the UE stores the device data. The device data-related information may be stored together with the device data. The examples of device data-related information disclosed in the first embodiment may be applied as appropriate. The base station may configure, for the UE, the device data-related information to be stored together with the device data. The configuration may be included in the configuration for UE-device communication. The configuration may be included in the configuration for device data transmission. This enables to configure which device data-related information is to be stored or which device data-related information is to be transmitted to the base station.

Information about a buffer for storing the device data in the UE may be provided. The information may be, for example, the amount of device data to be stored in the UE. For example, the information may be the maximum amount of device data to be stored in the UE. It may indicate a predetermined amount of device data. The predetermined amount may be a threshold. For example, when the amount of device data reaches the threshold, the device data may be transmitted to the base station. For example, the device data exceeding the threshold may not be stored or may be discarded. For example, instead of discarding the device data exceeding the threshold, the UE may store new data, and discard old data corresponding to an amount exceeding the threshold. For example, the UE may store device data for a service with high priority, and discard old data having an amount exceeding the threshold from among device data for a service with low priority. For example, the UE may store device data for a service requiring low latency, and discard device data having an amount exceeding the threshold from among device data for a service tolerating high latency.

The base station may transmit, to the UE, the information about the buffer for storing the device data in the UE. The base station may transmit, to the UE, information about a processing method when the amount of device data stored in the UE exceeds the threshold. The processing method may be included in the configuration for UE-device communication. The processing method may be included in the configuration for device data transmission. The UE being not connected to the base station stores the device data received from the device until the UE connects to the base station and transmits the device data to the base station. In this way, for example, the amount of buffer in the UE required for device data storage can be limited.

Information about the number of devices for device data to be stored in the UE may be provided. The information may be, for example, the maximum number of devices for device data to be stored in the UE. The information may indicate a predetermined number of devices. The predetermined number may be a threshold. For example, when the number of devices reaches the threshold, the device data may be transmitted to the base station. For example, device data received from other devices after the number of devices exceeds the threshold may not be stored or may be discarded. For example, instead of discarding device data from other devices after the number of devices exceeds the threshold, data from new devices as many as a number of devices exceeding the threshold may be stored, and data from older devices as many as the number of devices exceeding the threshold may be discarded. For example, the UE may store device data from devices for services with high priority, and discard device data from other devices, which correspond to services with low priority, as many as a number of devices exceeding the threshold. For example, the UE may store device data from devices for services requiring low latency, and discard device data from other devices, which correspond to services tolerating high latency, as many as the number of devices exceeding the threshold.

The base station may transmit, to the UE, information about the number of devices for the device data to be stored in the UE. The base station may transmit, to the UE, information about a processing method when the number of devices for the device data stored in the UE exceeds a threshold. The processing method may be included in the configuration for UE-device communication. The processing method may be included in the configuration for device data transmission. The same technical advantages as described above can be gained.

A method for transmitting the device data received from the device to the base station by the UE being not connected to the base station will be disclosed. When the UE connects to the base station, the UE transmits the device data. The UE may transmit the device data when the UE transitions to RRC_Connected. The UE in the RRC_Idle or RRC_Inactive state receives the device data from the device, and then, the UE transmits the device data to the base station when the UE transitions to the RRC_Connected state. The UE may transmit the device data to the base station when the UE first transitions to the RRC_Connected state after receiving the device data. This allows the UE to avoid connecting to the base station solely for the purpose of transmitting the device data. This simplifies UE control and avoids increased power consumption.

Another method will be disclosed. By applying a timing configuration for transmitting the device data from the UE, the UE transmits the device data to the base station. The UE may transmit the device data to the base station by using information, which has been received from the base station, about the timing configuration for transmitting the device data. In order to transmit the device data, the UE connects to the base station at or prior to a timing for transmitting the device data. The UE may transition to the RRC_Connected state. The UE that has connected to the base station transmits the device data to the base station. This allows the UE being not connected to the base station to transmit the device data to the base station at the timing at which the UE transmits the device data.

Another method will be disclosed. The UE transmits the device data when the UE receives the device data transmission indication from an NW node. For example, a paging may be used. The device data transmission indication information is included in a paging message. The device data transmission indication information may be included in DCI used for paging, and the DCI may be transmitted. The device data transmission indication information may be included in a short message. Configuration for transmitting the device data immediately after receiving the device data transmission indication may be used. Alternatively, configuration for transmitting the device data after a predetermined period of time has elapsed after receiving the device data transmission indication may be used. The predetermined period of time may be included in the timing information for transmitting the device data. When the predetermined period of time is set to 0, it may be configured to transmit the device data immediately after the end of communication. The predetermined period of time may be included in the configuration information for device data transmission, the paging message, the DCI used for paging, or the short message. The predetermined period of time may be included in the paging message, the DCI used for paging, or the short message, together with the device data transmission indication information. This allows the UE being not connected to the base station to receive the device data transmission indication information. Upon reception of the device data transmission indication information, the UE connects with the base station. The UE connected to the base station transmits the device data to the base station. In this way, the UE can transmit, to the base station, the device data received when the UE is not connected to the base station.

Another method will be disclosed. The SIB is used to transmit the device data transmission indication. The base station transmits the SIB including the device data transmission indication information. The methods disclosed above may be applied to the transmission timing after receiving the device data transmission indication. The predetermined period of time may be included in the configuration information for device data transmission or the SIB. The predetermined period of time may be included in the same SIB as that for the device data transmission indication information. Upon receiving the device data transmission indication information, the UE connects with the base station. This allows the UE being not connected to the base station to receive the device data transmission indication information. Upon connecting to the base station, the UE transmits the device data to the base station. In this way, the UE can transmit the device data to the base station.

Another method will be disclosed. The UE transmits the device data when the UE moves between cells. For example, the UE transmits the device data when the UE performs cell selection or cell reselection. The UE may transmit the device data to the selected or reselected cell. When there is device data to be transmitted, the UE connects to the selected or reselected cell. Upon connecting to the cell, the UE transmits the device data to the cell. In this way, the UE can transmit the device data to the base station even when the UE moves between cells.

Another method will be disclosed. The UE transmits the device data when the UE moves between RNAs. The UE may transmit the device data to the base station when the UE moves between RNAs. When there is device data to be transmitted, the UE connects to the base station. Upon connecting to the base station, the UE transmits the device data to the base station. In this way, the UE can transmit the device data to the base station even when the UE moves between RNAs.

Another method will be disclosed. The UE transmits the device data when the UE moves between TAs. The UE may transmit the device data to the base station when the UE moves between TAs. When there is device data to be transmitted, the UE connects to the base station. Upon connecting to the base station, the UE transmits the device data to the base station. In this way, the UE can transmit the device data to the base station even when the UE moves between TAs.

The methods disclosed above show that the UE connects to the base station and transmits the device data to the base station. The UE may transmit the device data to the base station in a connection procedure with the base station. The UE can transmit the device data to the base station at an early stage.

The base station may configure, for the UE being not connected to the base station, a method allowing the UE to transmit the device data received from the device to the base station. The base station may transmit information indicating the transmission method to the UE. For example, the base station may transmit, to the UE, information indicating which of the transmission methods disclosed above is to be used. The information indicating the transmission method may be included in the configuration for device data transmission. This allows the base station to configure the method of transmitting to the base station the device data received by the UE being not connected to the base station, which results in, for example, flexible control suitable for a service.

The UE transmits the device data to the base station. The UE may transmit part or all of the stored device data. The UE may transmit the device data-related information to the base station. The UE may transmit part or all of the stored device data-related information. It may be configurable which device data and device data-related information is transmitted to the base station. For example, only device data and device data-related information for a certain service may be configured to be transmitted to the base station. For example, only device data and device data-related information received from devices in a certain area may be configured to be transmitted to the base station. The base station transmits, to the UE, information indicating which device data and device data-related information is to be transmitted to the base station. The information may be included in the configuration for device data transmission. In this way, for example, the base station can receive desired device data and device data-related information from the UE.

The UE may initiate UE-device communication when the connection with the base station is released (which may be the case of transition to the RRC_Idle or RRC_Inactive state) after receiving the configuration for UE-device communication. After the UE transitions from the RRC_Idle or RRC_Inactive state to the RRC_Connected state, the UE-device communication may be terminated. After the UE again transitions to the RRC_Idle or RRC_Inactive state, the UE may resume UE-device communication.

For example, when the UE connected to the base station using the method disclosed in the first embodiment is performing UE-device communication and the connection with the base station is released (which may be the case of transition to the RRC_Idle or RRC_Inactive state), UE-device communication may be continued. When the UE transitions to the RRC_Idle or RRC_Inactive state, UE-device communication may be performed by using the configuration for UE-device communication to be used in the state where the UE is not connected to the base station. The configuration for UE-device communication appropriate for the state of the UE can be used. In another method, the configuration for UE-device communication to be used in the state where the UE is connected to the base station may be used continuously. The UE does not need to change the configuration for UE-device communication, and therefore, the communication processing can be continued, and the communication can be performed with low latency.

When a UE being not connected to the base station is performing UE-device communication, and a connection with the base station is established (which may be the case of transition to the RRC_Connected state), the UE-device communication may be continued. The methods disclosed in the first embodiment may be used for continuing the communication. When the UE has transitioned to the RRC_Connected state, UE-device communication may be performed using the configuration for UE-device communication to be used in the state where the UE is connected to the base station. The configuration for UE-device communication appropriate for the state of the UE can be used. In another method, the configuration for UE-device communication to be used in the state where the UE is not connected to the base station may be used continuously. The UE does not need to change the configuration for UE-device communication, and therefore, the communication processing can be continued, and the communication can be performed with low latency.

It may be configured in advance whether or not to continue to use the configuration for UE-device communication when the connection state of the UE transitions. The base station may notify the UE of information indicating whether or not to continue to use the configuration for UE-device communication. This enables the provision of UE-device communication suitable for a service that uses devices.

The release of the configuration for UE-device communication, the start indication for UE-device communication, the termination indication for UE-device communication, the act of the configuration for UE-device communication, and the deact of the configuration for UE-device communication, which are disclosed in the first embodiment, may be applied as appropriate. These may be notified while the UE is connected to the base station. When the connection between the UE and the base station is released, a determination may be made whether to perform UE-device communication according to the above-described configuration(s). For example, when the UE has transitioned to the RRC_Idle or RRC_Inactive state, the UE has been notified of the start indication for UE-device communication and the termination indication for UE-device communication has not been notified, the UE may start UE-device communication.

Information indicating whether or not device data is terminated may be provided. The methods disclosed in the first embodiment may be applied as appropriate. The UE, base station or CN node that has received the information can recognize that the transmission of device data from the device is finished.

The UE being not connected to the base station may store the device data received from the device. A buffer for storing the device data may be provided in the UE.

The UE transmits the device data to the base station. The UE being not yet connected to the base station connects to the base station prior to transmitting the device data to the base station. The UE transmits the device data to the base station using the configuration for device data transmission received from the base station. The UE may terminate the transmission of device data upon receiving the release of the configuration for device data transmission. In another method, the UE, which has connected to the base station prior to transmitting the device data to the base station, may start the transmission of device data upon receipt of the start indication for device data transmission. The UE may terminate the transmission of device data upon receipt of the termination indication for device data transmission. In another method, the UE, which has connected to the base station prior to transmitting the device data to the base station, may start the transmission of device data upon receiving the act of the configuration for device data transmission. The UE may terminate the transmission of device data upon receiving the deact of the configuration for device data transmission.

Receipt of the release of the configuration for device data transmission, receipt of the start indication for device data transmission, receipt of the termination indication for device data transmission, receipt of the act of the configuration for device data transmission, and receipt of the deact of the configuration for device data transmission may be performed by the UE in a connection procedure with the base station. The above-described subsequent processes may be performed in the connection procedure with the base station. The above-described processes are performed in the connection procedure with the base station, enabling the above processes including device data transmission to be carried out earlier.

A method for transmitting the device data from the UE to the base station will be disclosed. The UE may transmit the device data to the base station by using RRC signaling. An RRC message including the device data may be transmitted. This enables to transmit a larger amount of data.

The device data may be transmitted, for example, in RRC establishment processing. An RRCSetupComplete message including the device data may be transmitted, for example. The device data may be transmitted, for example, in RRC reestablishment processing. An RRCReestablishmentComplete message including the device data may be transmitted, for example. The device data may be transmitted, for example, in RRCResume processing. An RRCResumeComplete message including the device data may be transmitted, for example.

The device data may be transmitted, for example, in RRCReconfiguration processing. An RRCReconfiguration message including the device data may be transmitted, for example. An UEInformationResponse message including the device data may be transmitted, for example. An ULInformationTransfer message including the device data may be transmitted, for example. A NAS message including the device data may be transmitted with RRC signaling, for example.

In another method, a new RRC message for device data transmission may be provided. It is possible to provide a message suitable for the configuration for device data transmission and the device data to be transmitted.

Other methods will be disclosed. The UE may transmit the device data to the base station using MAC signaling. For example, the UE may transmit a MAC CE including the device data. The UE may transmit the device data to the base station by multiplexing the device data with other MAC data. The device data can be transmitted together with other data, which results in efficient transmission.

Other methods will be disclosed. The UE may transmit the device data to the base station using L1/L2 signaling. The device data may be included in the UCI. The UCI including the device data may be transmitted on the PUCCH. This enables communication of the device data between the UE and the base station earlier.

Other methods will be disclosed. The UE may transmit the device data to the base station in RA processing. For example, an Msg3 including the device data may be transmitted in 4-step RA processing, or an MsgA including the device data may be transmitted in 2-step RA processing. This enables communication of the device data between the UE and the base station earlier.

The PUSCH may be used to transmit the device data from the UE to the base station. The methods disclosed in the first embodiment may be applied as appropriate.

The UE may maintain the connection with the base station after transmitting the device data to the base station. In another method, the UE may release the connection with the base station after transmitting the device data to the base station. After transmitting the device data to the base station, the UE may return to the original state before starting to transmit the device data with respect to the connection with the base station. Processing to be executed after device data transmission may be configurable. The base station configures, for the UE, a processing method after device data transmission. Information about the processing method configuration may be included in the configuration for UE-device communication or the configuration for device data transmission. In this way, for example, the base station makes the UE perform processing suitable for the situation of the UE transmitting the device data.

Information indicating that there is device data available for transmission in the UE may be provided. For example, when the UE cannot transmit device data in one signaling, the UE transmits the information to the base station. Upon receiving the information, the base station can recognize that there is device data available for transmission in the UE. The information may be transmitted together with the device data. For example, this enables to indicate early that there is still device data to be transmitted. The information may be transmitted separately from the device data. This enables to indicate in a timely manner that there is device data available for transmission.

As the method for transmitting the device data-related information from the UE to the base station, the above-described device data transmission methods may be applied as appropriate. The device data-related information may be transmitted together with the device data or using another signaling. The UE may transmit the device data and device data-related information using the configuration for device data transmission received from the base station. In this way, the base station can receive the device data-related information.

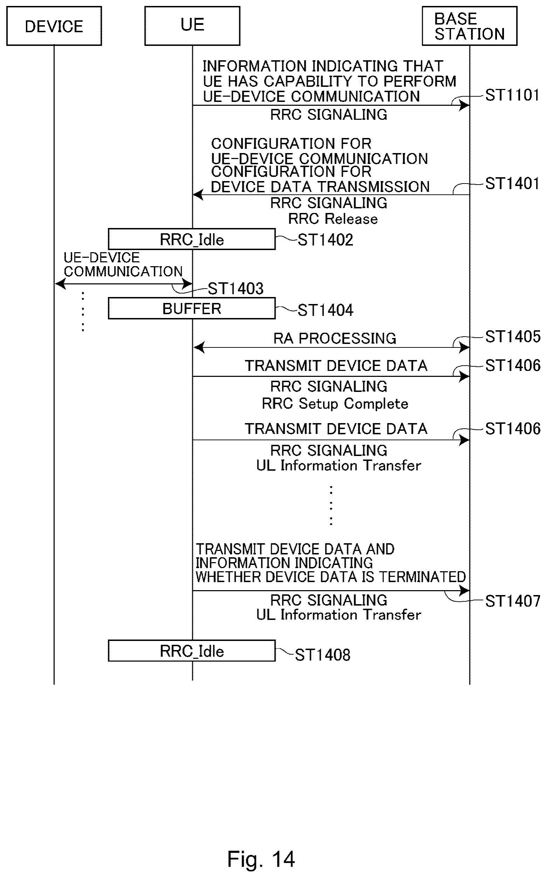

Fig. 14 is a diagram illustrating a sequence example in which the UE being not connected to the base station transmits device data acquired from the device to the base station. Fig. 14 illustrates a case where the UE in the RRC_Idle state transmits device data acquired from the device to the base station. The steps common to those of Fig. 11 are denoted by the same step numbers, and common description is omitted. While the UE is connected to the base station (may be in the RRC_Connected state), the UE notifies the base station of information indicating that the UE has the capability to perform communication with the device in Step ST1101. The information indicating that the UE has the capability to perform communication with the device may include information indicating a connection state of the UE capable of communicating with the device.

There may be provided the configuration for UE-device communication to be used in the state in which the UE is not connected to the base station, and the configuration for transmission of device data received in the state in which the UE is not connected to the base station. The configurations corresponding to the respective connection states of the UE (RRC_Connected, RRC_Idle, and RRC_Inactive) may be provided. The UE may use such configurations according to the connection state with the base station when communicating with the device. Whether or not the configurations corresponding to the respective connection states of the UE are configured may differ according to the type of configuration, that is, the configuration for UE-device communication or the configuration for device data transmission. For example, the configurations for UE-device communication corresponding to the respective connection states of the UE may be configured, meanwhile one configuration for device data transmission may be configured common to all the states. The configurations corresponding to the respective connection states of the UE may be separately transmitted, or transmitted collectively as one configuration. When the configurations corresponding to the respective connection states of the UE are transmitted as one configuration, each configuration includes information indicating for which connection state the configuration is to be used, and such configuration may be transmitted. This enables configuration suitable for the connection state with the base station when the UE communicates with the device. More flexible control can be performed.

In Step ST1401, the base station transmits, to the UE, the configuration for UE-device communication and configuration for device data transmission that are to be used in the RRC_Idle state. The base station may transmit the configurations while the UE is connected to the base station. For example, RRC signaling may be used for transmission of the configurations. The configurations may be included, for example, in an RRCRelease message, which is a message for transitioning from the RRC_Connected state to the RRC_Idle state, and the message may be transmitted. The configuration for device data transmission may be transmitted using separate signaling from the configuration for UE-device communication. The UE that has received the configurations can receive configuration information for communication with the device in the RRC_Idle state and configuration information for transmitting device data received in the RRC_Idle to the base station. In Step 1402, the UE that has received the RRCRelease transitions to the RRC_Idle state.

The UE has received the configuration for UE-device communication while being in the RRC_Connected state. After transitioning to the RRC_Idle state, in Step ST1403, the UE communicates with the device using the configuration information. Upon receiving device data from the device, the UE stores the device data in Step ST1404. The device data may be stored in the buffer provided in the UE. The device data may be stored in the buffer until it is transmitted to the base station.

The UE performs connection processing with the base station for transmitting the device data. In Step ST1405, the UE performs RA processing with the base station. In Step ST1406, the UE transmits the device data to the base station. The base station receives the device data transmitted from the UE. For example, RRC signaling may be used for transmission of the device data. The device data may be included, for example, in an RRCSetupComplete message in the connection processing between the UE and the base station, and the message may be transmitted.

When the UE cannot transmit the device data in one signaling, the UE transmits further the device data. For example, RRC signaling may be used for this transmission. For example, the device data may be included in an ULInformationTransfer message, and the message may be transmitted. The UE continues to transmit to the base station until the device data is terminated. When the device data to be transmitted is terminated, in Step ST1407, the UE transmits information indicating whether or not the device data is terminated, together with the device data. Upon receiving the information indicating whether or not the device data is terminated, the base station can recognize that the transmission of device data has terminated with the device data transmitted in Step ST1407.

After the device data transmission is terminated, in Step ST1408, the UE may return to the state before starting communication with the UE (UE-device communication), i.e., the RRC_Idle state. To return the UE to the RRC_Idle state, the base station may transmit an RRCRelease message to the UE. For example, the base station that has received the last device data in Step ST1407 transmits the RRCRelease message to the UE. The UE that has received the RRCRelease message transitions to the RRC_Idle state. The UE may again perform UE-device communication after the transition to RRC_Idle state. The UE may perform UE-device communication even after the transition to RRC_Idle state until the UE receives the release of the configuration for UE-device communication from the base station. Steps ST1403 to ST1408 may be repeated until the UE receives the release of the configuration for UE-device communication from the base station.

The UE may store device data-related information. The UE may transmit the device data-related information to the base station. In Step ST1404, the UE may store the device data-related information together with the device data. In Steps ST1406 to ST1407, the UE may transmit the device data-related information to the base station. For example, when the configuration for device data transmission includes configuration information for transmitting the device data-related information, the UE may store the device data-related information together with the device data in Step ST1404, and transmit the device data-related information together with the device data in Steps ST1406 to ST1407. The base station can receive the device data-related information.

In the example of Fig. 14, the case in which the UE in the RRC_Idle state performs UE-device communication is disclosed. In another example, the UE in the RRC_Inactive state may perform UE-device communication. The example sequence in Fig. 14 may be applied as appropriate to such an example. For example, in Step ST1401, the base station transmits the configuration for UE-device communication that is to be used in the RRC_Inactive state, and the configuration for device data transmission for the device data received by the UE in the RRC_Inactive state from the device. An RRCRelease message with Suspend may be used for this transmission. Upon receiving the RRCRelease message with Suspend, the UE transitions to the RRC_Inactive state. The UE that has transitioned to the RRC_Inactive state performs UE-device communication using the configuration received from the base station. An RRCResumeComplete message may be used for transmission of the device data from the UE to the base station.

In this way, the UE being not connected to the base station can perform UE-device communication, and transmit the device data received from the device to the base station. The base station can receive the device data from the device via the UE. Communication between the device and the NW can be performed.

The UE being not connected to the base station may communicate with a plurality of devices. The methods disclosed in the first embodiment may be applied as appropriate to the method for communicating with the plurality of devices. The same technical advantages can be gained.

The base station may notify surrounding base stations of the configuration for UE-device communication and/or configuration for device data transmission that are configured for the UE. When the UE moves to another base station, the another base station can use such configurations for the UE received from the surrounding base station. When, for transmitting the device data, the UE is connected to a different base station from the base station from which the configurations have been received, the UE may use the configurations to transmit the device data. The different base station receives the configurations for the UE from the surrounding base station, and therefore, can receive the device data. When the UE is present within a range of a different base station from the base station from which the configurations have been received, the UE may use the configurations for communication with the device. The different base station receives the configurations for the UE from the surrounding base station, and therefore, can recognize the configuration for UE-device communication.

The base station may modify part or all of the configuration for UE-device communication and/or configuration for device data transmission that have been received from the surrounding base station. When the UE is connected to a different base station from the base station from which the configurations have been received, the different base station may transmit the modified configurations to the UE. Only the modified information may be transmitted. In this way, for example, the base station can make new configurations for the UE considering the situation of its own base station.

By using the methods as disclosed in the present embodiment, the UE being not connected to the base station can perform UE-device communication. The UE being not connected to the base station can receive the device data. The UE can transmit, to the base station, the device data received from the device while the UE is not connected to the base station. The base station can receive the device data received by the UE being not connected to the base station. This enables communication between the device and the NW via the UE.

### Third Embodiment

In the 3GPP, the integration of ultra-low power consumption IoT devices into the mobile communication system has been discussed. In a configuration in which a device is incorporated into the mobile communication system, a method for communicating device data between the device and the NW and a method for managing device data in the NW are required. However, these methods have not been disclosed in any documents. In the present embodiment, a method for solving the above problem will be disclosed.

As an example of a method to solve the above problem, an application may transmit the configuration for UE-device communication and/or configuration for device data transmission to the base station. The application may be, for example, an AF or an AS. The configurations may be transmitted from a DN (Data Network) to the base station. A MnS may transmit the configurations to the base station. The MnS may manage the device. The MnS may be, for example, a MaS or a DCE. A CN node may transmit the configurations to the base station. The CN node may manage the device. The CN node may be, for example, an AMF, an SMF, a UPF, a PCF, a UDM, an NF, an NWDAF (Network Data Analytics Function), or a DMF. The base station transmits the configurations to the UE. For a method of transmitting the configurations from the base station to the UE, the methods as disclosed in the first and second embodiments may be applied as appropriate. The UE communicates with the device. The UE may perform UE-device communication using the configuration for UE-device communication received from the application, etc. via the base station.

The UE transmits device data to the base station. The UE may transmit the device data using the configuration for device data transmission received from the application, etc. via the base station. The base station transmits, to the application, the device data received from the UE. The base station may transmit the device data to the DN. The base station may transmit the device data to the MnS. The base station may transmit the device data to the CN node.

The device data-related information may be transmitted together with the device data. The device data-related information may be included in the device data or may be transmitted together with the device data. Alternatively, the device data-related information may be transmitted separately from the device data. The destination of device data and the destination of device data-related information may be different. For a method of transmitting the device data-related information, the methods as disclosed in the first and second embodiments may be applied as appropriate.

In this way, the application using the device can perform the above configurations, and therefore, can receive the device data and device data-related information. This enables to provide services using the device. In addition, the DN can transmit the configurations, and therefore, can receive the device data and device data-related information. For example, a node connected to the DN can manage the device, device data, and device data-related information. The MnS can perform the above configurations, and therefore, can receive the device data and device data-related information. The MnS can manage the device, device data, and device data-related information. This enables to incorporate the device into the management of the mobile communication system. The CN node can perform the above configurations, and therefore, can receive the device data and device data-related information. The CN node can manage the device, device data, and device data-related information. This enables to incorporate the device into the mobile communication system.

The transmission source of the configurations and the transmission destination of the device data and device data-related information do not have to be the same. They may be different. For example, the MnS may perform the configurations, and the device data may be transmitted to the application. This enables to provide a wide variety of services using the device.

The application may transmit the configuration for UE-device communication and/or configuration for device data transmission to a node associated with UE-device communication or node associated with device data transmission. Not the application, but the DN, MnS, or CN node may transmit the configurations. Associated nodes include, for example, the base station, the AMF, the SMF, the UPF, the NWDAF, the NEF, the DMF, and so on. The configurations to transmitted to the associated nodes may be part or all of the configurations transmitted to the UE.

There may be one or more transmission sources of the configuration information. A plurality of transmission sources may configure the configuration information by dividing the configuration information. For example, the AF may perform configuration related to a service, and the base station may perform configuration related to the RAN. This enables to perform settings suitable for the functions of sources transmitting the configurations.

A transmission route of device data and/or device data-related information will be disclosed. When the device data and others are transmitted to the CN node, the base station transmits them to the CN node. The device data and others may be transmitted from the base station to the CN node via another CN node. For example, the device data and others may be transmitted from the base station to the NWDAF via the AMF. For example, the device data and others may be transmitted from the base station to the DMF via the AMF and NWDAF. When the device data and others are transmitted to the MnS, the base station may transmit them to the MnS. The device data and others may be transmitted to the MnS via the CN node. For example, the device data and others may be transmitted from the base station to the NWDAF via the AMF and DCE. When the device data and others are transmitted to the AF, the base station may transmit them to the AF via the CN node. The device data and others may be transmitted from the base station to the AF via the MnS. For example, the device data and others may be transmitted from the base station to the AF via the AMF and NEF. For example, the device data and others may be transmitted from the base station to the AF via the MnS. For example, the device data and others may be transmitted from the base station to the AF via the AMF and MnS. For example, the device data and others may be transmitted to the AF via the AMF, NWDAF and DCE.

When the device data and others are transmitted to the AS, the base station transmits them to the AS via the CN node. For example, the device data and others may be transmitted from the base station to the AS via the UPF. For example, the device data and others may be transmitted from the base station to the AS via the AMF, SMF and UPF. When the device data and others are transmitted to the DN, the base station transmits them to the DN via the CN node. For example, the device data and others may be transmitted from the base station to the DN via the UPF. For example, the device data and others may be transmitted from the base station to the DN via the AMF, SMF and UPF.

The transmission route of device data and/or device data-related information may be configurable. The above-described transmission source of the configuration for the device data transmission may configure the transmission route of device data. Configuration information about the transmission route of device data may be included in the configuration for device data transmission. The transmission source of the configuration for device data transmission may transmit the configuration information about the transmission route to a node associated with device data transmission.

Six examples of configuration information about the device data transmission route are disclosed below.

(1) Information about a device data transmission destination.
(2) Information about a node transmitting device data.
(3) Information about a node receiving device data.
(4) Information about a service.
(5) Information for identifying a transmission route of device data.
(6) A combination of (1) through (5).

(1) is information about a transmission destination of device data. The information may be information for identifying the transmission destination. For example, it may be an identifier, an address, or the like. For example, it may be information for identifying a node to which the device data is transmitted (for example, the AMF, UPF or the like). The above-described pieces of information may be combined. (2) may be information indicating to which node the device data is transmitted. For example, the information may be information for identifying the node, such as an identifier, an address, or the like. The information may be, for example, information for identifying a device data transmission destination node. The above-described pieces of information may be combined. (3) may be information indicating from which node the device data is received. For example, the information may be information for identifying the node, such as an identifier, address, or the like. For example, the information may be information for identifying a device data transmission source node (for example, the AMF, UPF or the like). The above-described pieces of information may be combined. (4) may be information for identifying a service. For example, it may be an identifier of the service. In another example, the information may be QoS required for the service.

There may be provided information for identifying a configured transmission route of service data, for example, an identifier thereof. (5) may be the above information. A plurality of routes may be configured, and an identifier indicating which route configuration is to be used may be configured. A service and an identifier for identifying a route thereof may be configured in association with each other. For each route configuration, the pieces (1) to (4) of information may be associated with each other. This enables to configure a route suitable for the service.

Each node that has received the configuration information about the transmission route can recognize from which node the device data is to be received, to which node the device data is to be transmitted, and the final destination of the device data.

This enables to configure a transmission route of device data. For example, it is possible to configure a transmission route suitable for a service using the device, or configure a transmission route suitable for the situation of each node.

The application may transmit a device data transmission request to the base station. The DN, MnS, or CN node may transmit the device data transmission request to the base station. The base station may transmit the device data transmission request to the UE. For a method of transmitting the device data transmission request from the base station to the UE, the methods as disclosed in the first and second embodiments may be applied as appropriate. The UE that has received the request transmits the device data to the base station. The base station that has received the device data from the UE transmits the device data to a request source of the device data.

The request source of the device data transmission may be the above-described device data transmission destination. The transmission route of the device data transmission request may be the reverse of the device data transmission route disclosed above. The request source of the device data transmission may configure the device data transmission route. The request source of the device data transmission may configure the device data transmission route, and transmit the configuration information to a node associated with device data transmission. The request source of the device data transmission may be the same as or different from the transmission source of the configuration for UE-device communication and/or configuration for device data transmission.

According to the above method, the configuration source of the configuration for UE-device communication and/or configuration for device data transmission can be different from the transmission source of the device data transmission request. For example, the configuration source of the configuration for UE-device communication and/or configuration for device data transmission may be the PCF, and the transmission source of the device data transmission request may be the AF. This enables device data communication suitable for a service using the device.

The above disclosure includes that the NWDAF may be configured as the transmission destination of device data and/or device data-related information, or as the node in the transmission route. The device data and/or device data-related information may be input to the NWDAF. The NWDAF is a function for analyzing NW data. Since the device data and/or device data-related information are input to the NWDAF, the NWDAF can perform wide variety of analyses using the device data and/or device data-related information. The NWDAF may transmit results of the analyses to the device data transmission destination as outputs of the NWDAF. This enables to perform analysis processing on the device data and device data-related information in the mobile communication system, and the results can be used in the application, MnS or the like.

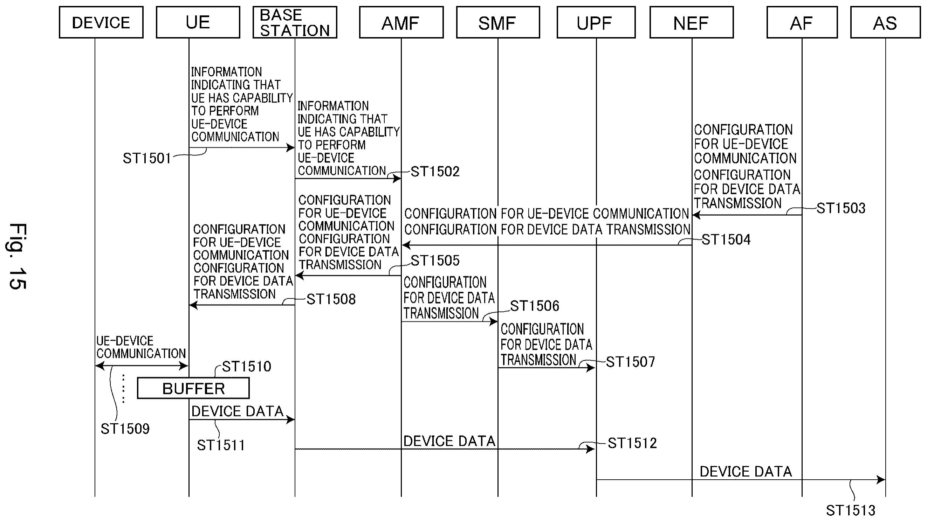

Fig. 15 is a diagram illustrating a sequence example of device data communication between the device and the NW. Fig. 15 illustrates the case where the AF corresponds to the transmission source of the configuration for UE-device communication and configuration for device data transmission, and the AS corresponds to the transmission destination of device data. In Step ST1501, the UE transmits, to the base station, information indicating that the UE has the capability to communicate with the device. In Step ST1502, the base station that has received the information transmits the information to the AMF. A NAS message including the information may be transmitted, for example. The AMF can recognize that the UE is capable of communicating with the device.

In Step ST1503, the AF transmits the configuration for UE-device communication and configuration for device data transmission to the NEF. In Step ST1504, the NEF that has received the configurations transmits them to the AMF. In Step ST1505, the AMF that has received the configurations transmits them to the base station. In Step ST1508, the base station that has received the configurations transmits them to the UE. In this way, the AF can transmit the configuration for UE-device communication and configuration for device data transmission to the UE. The UE can receive the configuration for UE-device communication and configuration for device data transmission from the AF. Upon receiving the configurations from the NEF, the AMF may determine which UE is capable of communicating with the device. The AMF may transmit the configurations to the UE that is capable of communicating with the device.

In Step ST1506, the AMF that has received the configurations from the NEF transmits the configuration for device data transmission to the SMF. The AMF may use information about the transmission route of device data included in the configuration to determine to which node the configuration is to be transmitted. In Step ST1507, the SMF that has received the configuration transmits the configuration to the UPF. The SMF and AMF may use the information about the transmission route of device data included in the configuration to determine to which node the configuration is to be transmitted. In this way, the AF can transmit the configuration for UE-device communication to a node that needs the configuration, and can transmit the configuration for device data transmission to a node that needs the configuration.

The configuration for device data transmission may be transmitted using separate signaling from the configuration for UE-device communication.

The UE that has received the configuration for UE-device communication in Step ST1508 performs communication with the device using the configuration in Step ST1509. Upon receiving device data from the device, the UE stores the device data in the buffer of the UE in Step ST1510. In Step ST1511, the UE transmits the device data to the base station. The configuration for device data transmission may be used for this transmission. In Step ST1512, the base station transmits the device data to the UPF. The configuration for device data transmission may be used for this transmission. The base station may use the information about the transmission route of device data included in the configuration to determine to which node the configuration is to be transmitted. In Step ST1513, the UPF transmits the device data to the AS. The configuration for device data transmission may be used for this transmission.

Information indicating whether or not the device data is terminated may be provided. The device may generate the information and transmit it to the UE. In another method, the UE may generate the information. The information may be provided on a per-device basis. For example, this is useful in a case where the device data is transmitted on a per-device basis. The information may be provided for device data from a plurality of devices. For example, this is useful in a case where pieces of device data from the plurality of devices are collectively transmitted. The UE may notify the CN node of the information indicating whether or not the device data is terminated. The CN node may notify the AS of the information indicating whether or not the device data is terminated. The UE may transmit the information to the base station, the base station may transmit the information to the CN node, and the CN node may transmit the information to the AS. The information may be transmitted together with the device data or separately from the device data. In this way, the CN node or AS that has received the information can recognize that the device data transmitted by the UE has been finished.

The UE may store device data-related information. In Step ST1510, the UE may store the device data-related information together with the device data. The UE may transmit the device data-related information to the base station. The base station may transmit the device data-related information to UPF, and the UPF may transmit the device data-related information to the AS. The device data-related information may be transmitted together with the device data. The base station, UPF, and AS may receive the device data-related information.

Modification and release of the configuration for UE-device communication and/or configuration for device data transmission may be provided. For example, the AF may transmit modification or release of the configuration for UE-device communication and/or configuration for device data transmission to the NEF, AMF, base station, and UE. Each node may modify the configuration according to the configuration modification, and may terminate UE-device communication or device data transmission according to the configuration release.

In this way, the AF causes the UE to perform UE-device communication, and the AS can receive the device data from the UE. The application can receive the device data via the UE. Communication between the device and the NW can be performed.

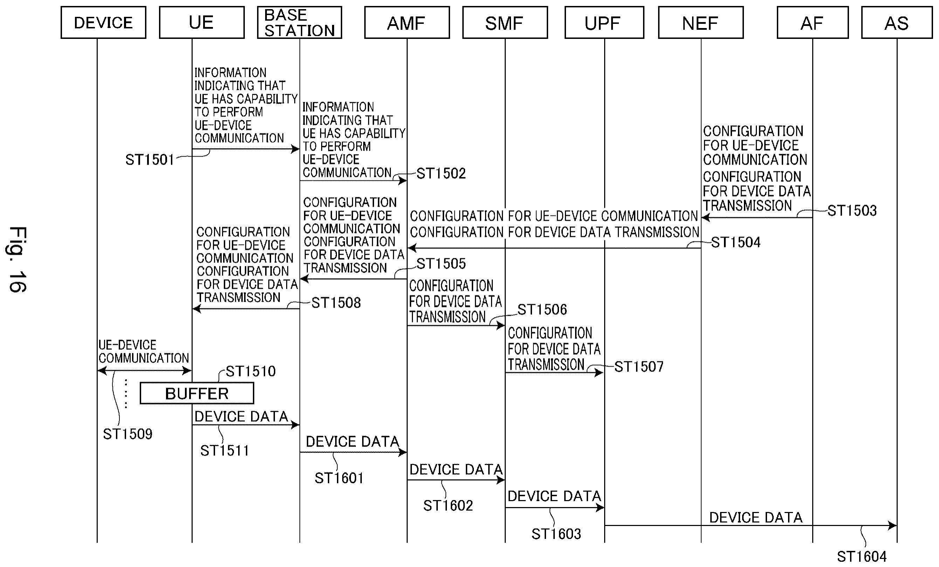

Fig. 16 is a diagram illustrating a first other sequence example of device data communication between the device and the NW. Fig. 16 illustrates the case in which the transmission route of device data differs from that of the example in Fig. 15. The steps common to those of Fig. 15 are denoted by the same step numbers, and common description is omitted. The base station that has received the device data from the UE in Step ST1511 transmits the device data to the AMF in Step ST1601. The configuration for device data transmission may be used for this transmission. The base station may determine to which node the device data is to be transmitted, using the information about the transmission route of device data included in the configuration. In Step ST1602, the AMF transmits the device data to the SMF. The configuration for device data transmission may be used for this transmission. In Step ST1603, the SMF transmits the device data to the UPF. The configuration for device data transmission may be used for this transmission. In Step ST1604, the UPF transmits the device data to the AS. The configuration for device data transmission may be used for this transmission.

As illustrated in Fig. 16, the base station transmits the device data to the UPF and AS via the AMF and SMF, and therefore, the device data can be transmitted from the UE to the AMF in the CP (Control Plane). This eliminates the need to use the UP (User Plane). For example, a DRB (Data Radio Bearer) does not need to be configured for device data transmission. An SRB (Signaling Radio Bearer) can be used to transmit the device data.

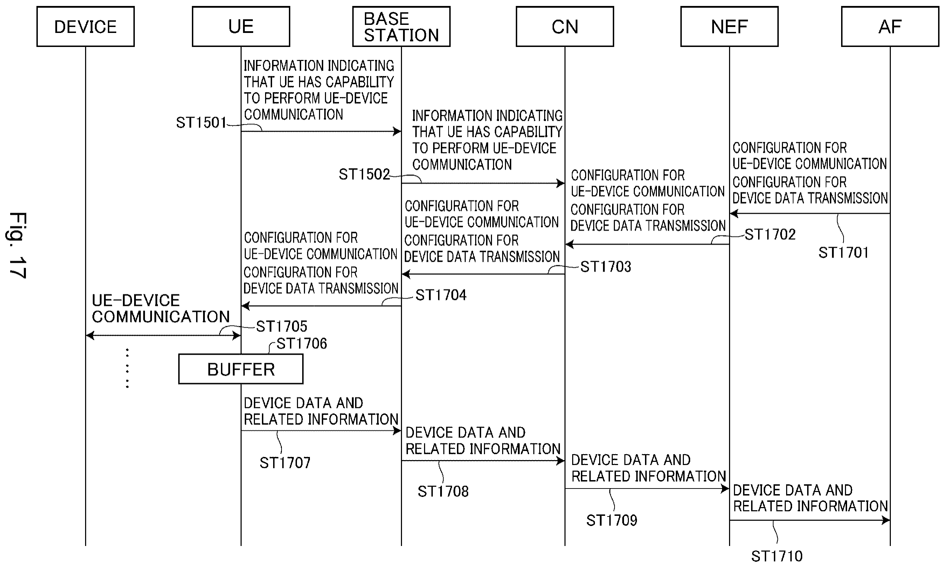

Fig. 17 is a diagram illustrating a second other sequence example of device data communication between the device and the NW. Fig. 17 illustrates the case where the AF is the transmission source of the configuration for UE-device communication and configuration for device data transmission, and the transmission destination of device data is also the AF. There may be provided one CN node, or a plurality of CN nodes. Communication between the base station and the NEF may be performed via one CN node or a plurality of CN nodes. The same step numbers are used for the steps common to those in Fig. 15, and common explanations are omitted.

In Step ST1701, the AF transmits the configuration for UE-device communication and configuration for device data transmission to the NEF. The NEF that has received the configurations transmits them to the CN node in Step ST1702. The CN node that has received the configurations transmits them to the base station in Step ST1703. The base station that has received the configurations transmits them to the UE in Step ST1704. In this way, the AF can transmit the configuration for UE-device communication and configuration for device data transmission to the UE. The UE can receive the configuration for UE-device communication and configuration for device data transmission from the AF. The CN node that has received the configurations from the NEF may determine which UE is capable of communicating with the device. The CN node may send the configurations to the UE that is capable of communicating with the device.

The configuration for device data transmission may be transmitted using separate signaling from the configuration for UE-device communication.

The UE that has received the configuration for UE-device communication in Step ST1704 performs communication with the device using the configuration in Step ST1705. Upon receiving device data from the device, the UE stores the device data in the buffer of the UE in Step ST1706. In Step ST1707, the UE transmits the device data to the base station. The configuration for device data transmission may be used for this transmission. In Step ST1708, the base station transmits the device data to the CN node. The configuration for device data transmission may be used for this transmission. The base station may use the information about the transmission route of device data included in the configuration to determine to which node the configuration is to be transmitted. In Step ST1709, the CN node transmits the device data to the NEF. The configuration for device data transmission may be used for this transmission. In Step ST1710, the NEF transmits the device data to the AF. The configuration for device data transmission may be used for this transmission.

The UE may store device data-related information. In Step ST1706, the UE may store the device data-related information together with the device data. The UE may transmit the device data-related information to the base station. The base station may transmit the device data-related information to the CN node. The CN node may transmit the device data-related information to the NEF. The NEF may transmit the device data-related information to the AF. The device data-related information may be transmitted together with the device data. The AF can receive the device data-related information.

In this way, the AF causes the UE to perform UE-device communication, and the AF can receive the device data from the UE. For example, by using a node in the CP as a CN node, the AF can receive the device data without using a CN node in the UP. Communication between the device and the NW on the UP can be performed.

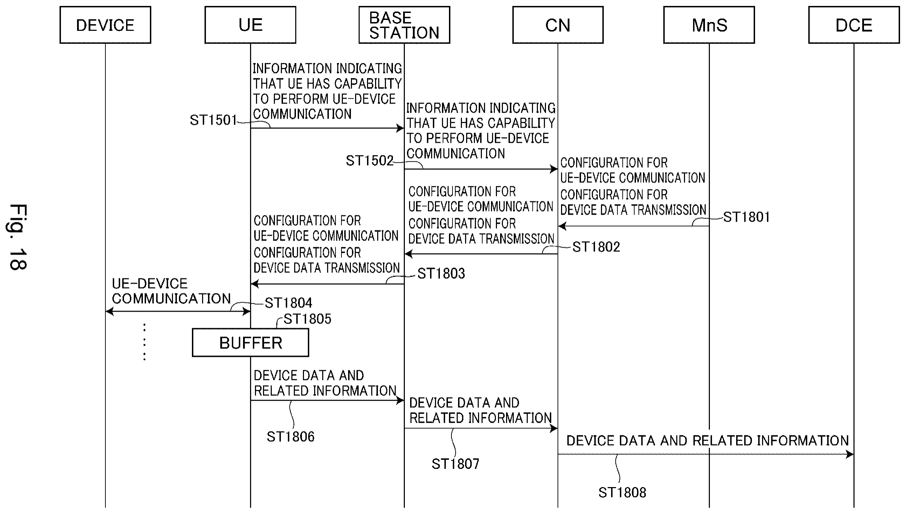

Fig. 18 is a diagram illustrating a third other sequence example of device data communication between the device and the NW. Fig. 18 illustrates the case where the MnS is the transmission source of the configuration for UE-device communication and configuration for device data transmission, and the transmission destination of device data is the DCE. There may be provided one CN node, or a plurality of CN nodes. Communication between the base station and the NEF may be performed via one CN node or a plurality of CN nodes. The same step numbers are used for the steps common to those in Fig. 15, and common explanations are omitted.

In Step ST1801, the MnS transmits the configuration for UE-device communication and configuration for device data transmission to the CN node. The CN node that has received the configurations transmits them to the base station in Step ST1802. The base station that has received the configurations transmits them to the UE in Step ST1803. In this way, the MnS can transmit the configuration for UE-device communication and configuration device data transmission to the UE. The UE can receive the configuration for UE-device communication and configuration for device data transmission from the MnS. The CN node that has received the configurations from the MnS may determine which UE is capable of communicating with the device. The CN node may transmit the configurations to the UE that is capable of communicating with the device.

The configuration for device data transmission may be transmitted using separate signaling from the configuration for UE-device communication.

The UE that has received the configuration for UE-device communication in Step ST1803 performs communication with the device using the configuration in Step ST1804. Upon receiving device data from the device, the UE stores the device data in the buffer of the UE in Step ST1805. In Step ST1806, the UE transmits the device data to the base station. The configuration for device data transmission may be used for this transmission. In Step ST1807, the base station transmits the device data to the CN node. The configuration for device data transmission may be used for this transmission. The base station may use the information about the transmission route of device data included in the configuration to determine to which node the configuration is to be transmitted. In Step ST1808, the CN node transmits the device data to the DCE. The configuration for device data transmission may be used for this transmission.

The UE may store device data-related information. In Step ST1805, the UE may store the device data-related information together with the device data. The UE may transmit the device data-related information to the base station. The base station may transmit the device data-related information to the CN node. The CN node may transmit the device data-related information to the DCE. The device data-related information may be transmitted together with the device data. The DCE may receive the device data-related information.

In this way, the management service of the mobile communication system causes the UE to perform UE-device communication, and a node for data collection can receive the device data from the UE. Communication between the device and the NW becomes possible.

The transmission destination of device data-related information and the transmission destination of device data may be the same or different. For example, when an NW node uses the device data and also uses the device data-related information, the destinations may be the same. For example, when a NW node uses the device data and another NW node uses the device data-related information, the destinations may be different from each other. For example, the device data may be transmitted to the AS, and the device data-related information may be transmitted to the AF. The data from the device may be stored in the AS and used for an application, meanwhile the device data-related information may be used by the AF for application management. For example, the device data may be transmitted to the AS, and the device data-related information may be transmitted to the MnS. The data from the device may be stored in the AS and used for an application, and the device data-related information may be used by the MnS for network management suitable for the application. In this way, the incorporation of the device can be implemented, and therefore, it is possible to construct a NW more suitable for a service using the device.

The methods as disclosed in the present embodiment enable device data communication between the device and the NW. The application, DN, MnS, or CN node can obtain device data and device data-related information, and can handle and manage the device data. For example, by transmitting the device data and device data-related information from the device such as a wearable terminal to the application, health conditions can be judged and managed using the application. For example, by transmitting, from industrial sensor devices, device data and device data-related information such as reception quality and location information to the NWDAF, the NWDAF can analyze those pieces of information. For example, by transmitting, from environmental sensor devices, device data and device data-related information such as time information and location information to the MnS, network resources can be optimized according to environment, time, location and others. In this way, devices can be incorporated into the 3GPP mobile communication system, and services using devices can be provided.

The UE may transmit device data and device data-related information to another UE. Alternatively, the UE may transmit device data and device data-related information to the NW via another UE. UE-to-UE relay may be used for transmission from the UE to another UE. UE-to-NW relay may be used for transmission from the UE to the NW. Those communications are implemented using PC5 that is an interface for direct UE-to-UE communication. For example, in the methods disclosed in the first to third embodiments, the UE-to-NW relay may be used in communication between the UE and the NW. The communication between the UE and the base station may be performed through the UE-to-NW relay. For example, a UE that is outside the base station range can transmit device data to the base station through the UE-to-NW relay. For example, in the methods disclosed in the first to third embodiments, the UE transmits device data and device data-related information to another UE. The other UE may transmit the received device data and device data-related information to the NW. For example, the UE that is outside the base station range can transmit device data to the base station through the other UE. For example, in the methods disclosed in the second embodiment, when the amount of device data and device data-related information exceeds a predetermined amount and the UE cannot store them in the buffer, the UE may transmit the device data and device data-related information exceeding the predetermined amount to the other UE. The other UE may transmit the received device data and device data-related information to the NW. In this way, even if there is a limit to the amount of data that can be stored in the UE, more device data and device data-related information can be transmitted to the NW.

One or a plurality of cells are configured for one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to communication between a UE and a UE or a UE and a NW via relay using SL communication.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

### Reference Signs List

- 202: Communication Terminal Apparatus (Mobile Terminal)
- 210: Communication System
- 213, 240-1, 240-2, 750: Base Station Apparatus (NR Base Station, Base Station)
- 214: 5G Core Unit
- 215: Central Unit
- 216: Distributed Unit
- 217: Control-Plane Central Unit
- 218: User-Plane Central Unit
- 219: TRP
- 301, 403: Protocol Processing Unit
- 302: Application Unit
- 304, 405: Encoder Unit
- 305, 406: Modulating Unit
- 306, 407: Frequency Converting Unit
- 307-1 to 307-4, 408-1 to 408-4: Antenna
- 308, 409: Demodulating Unit
- 309, 410: Decoder Unit
- 310, 411, 526: Control Unit
- 401: EPC Communication Unit
- 402: Other Base Station Communication Unit
- 412: 5GC Communication Unit
- 521: Data Network Communication Unit
- 522: Base Station Communication Unit
- 523: User Plane Communication Unit
- 523-1: PDU Processing Unit
- 523-2: Mobility Anchoring Unit
- 525: Control Plane Control Unit
- 525-1: NAS Security Unit
- 525-2: Idle State Mobility Management Unit
- 527: Session Management Unit
- 527-1: PDU Session Control Unit
- 527-2: UE IP Address Assigning Unit
- 751-1 to 751-8: Beam
- 752: Cell

## Claims

1. A communication system comprising:
a base station supporting a fifth generation radio access system;
a communication terminal configured to connect to the base station; and
a device configured to connect to the base station or the communication terminal,
wherein
the base station is configured to transmit, to the communication terminal, configuration information for communication being information about a configuration for communication between the communication terminal and the device, and configuration information for device data transmission being information about a configuration for transmitting device data acquired from the device by the communication terminal to the base station, and
the communication terminal is configured to
perform communication with the device using the configuration information for communication received from the base station, and
transmit the device data to the base station using the configuration information for device data transmission received from the base station.

2. The communication system according to claim 1, wherein
in a case where the communication terminal communicates with the device and acquires the device data when the communication terminal is not connected to the base station,
the communication terminal is configured to store the acquired device data, and transmit the stored device data to the base station when the communication terminal is connected to the base station.

3. The communication system according to claim 1 or 2, wherein
the configuration information for device data transmission includes device data transmission route configuration information being information about a transmission route of the device data, and
the communication terminal is configured to transmit the device data on a route according to the device data transmission route configuration information included in the configuration information for device data transmission received from the base station.
